# EUROPÄISCHE PATENTSCHRIFT

(11) **EP 4 323 163 B1**
(45) Veröffentlichungstag und Bekanntmachung des Hinweises auf die Patenterteilung: **18.11.2026**
(21) Anmeldenummer: 22723348.3
(22) Anmeldetag: 13.04.2022
(51) Int. Cl.: B05B 9/03, B05B 13/02, B05B 13/04, B05B 15/68, B23Q 11/00, B23Q 39/04

(54) **FLUIDBEARBEITUNGSMASCHINE UND VERFAHREN ZUR BEARBEITUNG VON WERKSTÜCKEN MIT EINEM FLUIDSTRAHL**
FLUID PROCESSING MACHINE AND METHOD TO PROCESS WORKPIECES WITH A FLUID JET
MACHINE DE TRAITEMENT AU MOYEN D'UN JET DE FLUIDE ET MÉTHODE POUR TRAITER DES PIÈCES AVEC UN JET DE FLUIDE

(30) Priorität: 15.04.2021 DE 102021109422
(43) Veröffentlichungstag der Anmeldung: 21.02.2024
(73) Patentinhaber: Piller Entgrattechnik GmbH, 71254 Ditzingen (DE)
(72) Erfinder: HAAG, Rouven, 73732 Esslingen (DE)
(74) Vertreter: Rüger Abel IP Legal Solutions GmbH
(86) Internationale Anmeldenummer: PCT/EP2022/059862
(87) Internationale Veröffentlichungsnummer: WO 2022/219038

(56) Entgegenhaltungen:
- DE-A1- 102008 019 825
- US-A1- 2005 181 713
- US-A1- 2016 141 200
- US-A1- 2018 308 717

## Beschreibung

Die Erfindung betrifft eine Fluidbearbeitungsmaschine sowie ein Verfahren zur Bearbeitung von Werkstücken mit einem Fluidstrahl.

Mittels der Fluidbearbeitungsmaschine bzw. dem Verfahren zur Fluidbearbeitung können Werkstücke beispielsweise mit einem Hochdruck-Fluidstrahl entgratet und/oder mit einer Waschflüssigkeit gereinigt und/oder mit einem insbesondere gasförmigen Fluid abgeblasen bzw. getrocknet werden. Diese Arbeitsvorgänge können individuell oder in beliebiger Kombination in einer vorgegebenen Reihenfolge ausgeführt werden.

Der Aufwand für die Fluidbearbeitung eines Werkstücks mit komplexer Geometrie, das beispielsweise Hinterschneidungen, Aussparungen, Bohrungen, Vorsprünge oder ähnliches aufweist, kann relativ groß sein. In Produktionsanlagen, bei denen Werkstücke in großer Stückzahl innerhalb einer kurzen Taktzeit hergestellt werden, muss die Fluidbearbeitung der Werkstücke möglichst mit derselben Rate erfolgen, um die Produktivität des gesamten Herstellungsprozesses nicht zu beschränken. Dafür kann es notwendig sein, mehrere separate Fluidbearbeitungsmaschinen bereitzustellen.

EP 1 911 528 B1 schlägt deswegen vor, eine Fluidbearbeitungsmaschine mit zwei separaten Arbeitskammern bereitzustellen, so dass in jeder Arbeitskammer ein Werkstück bearbeitet werden kann. Der konstruktive Aufwand hierfür ist allerdings sehr groß, da eine Vielzahl von Maschinenachsen und Werkzeugen für jede Arbeitskammer separat bereitgestellt werden muss.

DE 10 2016 117 246 A1 beschreibt eine Fluidbearbeitungsmaschine zum Entgraten mit zwei Teileinheiten, wobei jede Teileinheit eine Be- und Entladekammer sowie eine darunter angeordnete Bearbeitungskammer aufweist. In beiden Teileinheiten ist ein gemeinsames Druckflüssigkeitsreservoir zugeordnet und die Druckflüssigkeit wird zeitlich abwechselnd den unterschiedlichen Arbeitskammern bereitgestellt.

US 2018/0308717 A1 offenbart eine Wasserstrahlbearbeitungsmaschine gemäß dem Oberbegriff des Anspruchs 1 mit einer Werkstückhalterung für ein Werkstück. Die Maschine hat eine Basis und ein darauf angeordnetes vertikales Element, an dem Wasserstrahlwerkzeugeinheiten angeordnet sind. Mittels der Wasserstrahlwerkzeugeinheiten kann ein Hochdruckwasserstrahl zum Entgraten eines Werkstücks erzeugt werden. Über ein Positioniersystem können die Wasserstrahlwerkzeugeinheiten bewegt werden.

Eine Maschine zur Bearbeitung von Halbleiterwafern ist in US 2016/0141200 A1 beschrieben. Über Fluidwerkzeugeinheiten kann Kohlendioxid auf die Halbleiterwafer ausgestoßen werden. Zur Bewegung der Fluidwerkzeugeinheiten ist eine Positioniereinrichtung vorhanden. Mehrere Fluidwerkzeugeinheiten können an einem gemeinsamen Werkzeugträger angeordnet sein.

Eine Anlage zur Oberflächenbehandlung von Bauteilen mit einem Medium in einer Kabine ist aus DE 10 2008 019 825 A1 bekannt. In der Kabine ist eine Mehrzahl von Strahldüsen angeordnet, um das Bauteil zu behandeln. Das Bauteil kann mittels eines Roboterarms relativ zu den Strahldüsen bewegt werden.

Eine weitere Wasserstrahlbearbeitungsmaschine ist in US 2005/0181713 A1 beschrieben. An einer stationären Basis ist ein Stützelement mit einer Schiene befestigt. Wasserstrahldüsen sind entlang dieser Schiene linear bewegbar angeordnet. Ein Haltetisch für ein Werkstück ist relativ zu den Wasserstrahldüsen bewegbar angeordnet. Mittels der Wasserstrahldüsen kann beispielsweise ein Substrat geschnitten werden.

Es ist die Aufgabe der vorliegenden Erfindung, eine Fluidbearbeitungsmaschine und ein Verfahren zu schaffen, das einen einfachen konstruktiven Aufbau der Fluidbearbeitungsmaschine ermöglicht und dennoch eine hohe Bearbeitungsrate gewährleistet.

Diese Aufgabe wird durch eine Fluidbearbeitungsmaschine mit den Merkmalen des Patentanspruches 1 sowie ein Verfahren mit den Merkmalen des Patentanspruches 15 gelöst.

Die Fluidbearbeitungsmaschine weist eine Arbeitskammer auf. Das Bearbeiten der Werkstücke mit einem oder mehreren Fluidstrahlen findet in der Arbeitskammer statt. Die Fluidstrahlen werden mittels Fluidwerkzeugen erzeugt und auf die in der Arbeitskammer angeordneten, zu bearbeitenden Werkstücke gerichtet. Bei den Werkstücken kann es sich um ein Endprodukt oder ein Zwischenprodukt handeln, das im Anschluss in weiteren Schritten bearbeitet wird. Die Werkstücke können aus einem beliebigen Material bestehen, beispielsweise aus Metall, einer Metalllegierung, Kunststoff, einem Verbundwerkstoff, usw.

Zum Halten der Werkstücke weist die Fluidbearbeitungsmaschine wenigstens eine und vorzugsweise wenigstens zwei Halteeinrichtungen auf. In einer Bearbeitungsstellung ist zumindest eine oder sind zumindest zwei Halteeinrichtungen innerhalb der Arbeitskammer angeordnet. Die wenigstens eine Halteeinrichtung kann Bestandteil eines Werkstückhandhabungssystems sein, das auch zum Beladen und Entladen der Arbeitskammer im Rahmen der Werkstückhandhabung eingesetzt werden kann. Das Werkstückhandhabungssystem kann mehr Halteeinrichtungen aufweisen, als in der Bearbeitungsstellung in der gemeinsamen Arbeitskammer angeordnet werden können. Wenn sich beispielsweise eine oder mehrere Halteeinrichtungen in der gemeinsamen Arbeitskammer in der Bearbeitungsstellung befinden, können eine oder mehrere Halteeinrichtungen außerhalb der Arbeitskammer in einer Werkstückwechselstellung sein. In der Werkstückwechselstellung kann das wenigstens eine bearbeitete Werkstück entnommen und wenigstens ein zu bearbeitendes Werkstücks aufgespannt werden. Währenddessen kann das wenigstens eine Werkstück der Halteeinrichtungen, die in der Bearbeitungsstellung innerhalb der gemeinsamen Arbeitskammer angeordnet ist, mit einem oder mehreren Fluidstrahlen bearbeitet werden.

Außerdem kann eine Vorbearbeitung wenigstens eines zu bearbeitenden Werkstücks und/oder eine Nachbearbeitung wenigstens eines bereits bearbeiteten Werkstücks in der Werkstückwechselstellung durch die Fluidbearbeitungsmaschine oder eine zugeordnete Bearbeitungseinheit (z.B. Roboter) erfolgen.

Die Fluidbearbeitungsmaschine hat wenigstens zwei Fluidwerkzeugeinheiten mit jeweils mindestens zwei Fluidwerkzeugen. Die Fluidwerkzeuge der wenigstens zwei Fluidwerkzeugeinheiten sind an einem gemeinsamen Werkzeugträger angeordnet. Der Werkzeugträger gibt die Position der daran angeordneten Fluidwerkzeugeinheiten in X-Richtung und einer rechtwinklig zur X-Richtung ausgerichteten Y-Richtung vor. Diese Fluidwerkzeugeinheiten können somit gemeinsam über den Werkzeugträger in zwei Freiheitsgraden positioniert werden. Der Werkzeugträger kann in X-Richtung und/oder in Y-Richtung bewegbar gelagert sein, insbesondere linear bewegbar gelagert sein. Zwei in X-Richtung unmittelbar benachbarte Fluidwerkzeugeinheiten sind mit einem Querabstand zueinander angeordnet.

Mittels der Fluidwerkzeugeinheiten kann ein gemeinsames Werkstück bearbeitet werden, insbesondere ein Werkstück mit sich in X-Richtung im Querabstand wiederholender Struktur und/oder Geometrie, wie z.B. eine Kurbelwelle. In X-Richtung im Querabstand angeordnete Werkstückteile eines gemeinsamen Werkstücks können gleichzeitig und beispielsweise synchron bearbeitet werden. Mittels jeder der Fluidwerkzeugeinheiten kann auch jeweils ein zugeordnetes Werkstück bearbeitet werden, wobei die Werkstücke dann in X-Richtung im Querabstand angeordnet sein.

Befinden sich wenigstens zwei Halteeinrichtungen gleichzeitig in der Bearbeitungsstellung, haben die wenigstens zwei Halteeinrichtungen in einer X-Richtung einen Querabstand zueinander. Beispielsweise können in X-Richtung unmittelbar benachbart angeordneten Werkstücke mit Querabstand zueinander angeordnet. Es ist aber auch möglich, mehr Halteeinrichtungen mit jeweils einem Werkstück in der Arbeitskammer anzuordnen als es Fluidwerkzeugeinheiten gibt, beispielsweise vier Halteeinrichtungen mit jeweils einem Werkstück, wenn zwei Fluidwerkzeugeinheiten vorhanden sind. Unmittelbar in X-Richtung benachbarte Halteeinrichtungen können beispielsweise dann einen Werkstückabstand aufweisen, der ein ganzzahliger Teil des Querabstandes ist, z.B. die Hälfte des Querabstandes. Dann werden immer nur die im Querabstand in der Arbeitskammer vor den Fluidwerkzeugeinheiten angeordneten Werkstücke bearbeitet. Nacheinander können erst die einen und dann die anderen Halteeinrichtungen zur Bearbeitung vor den Fluidwerkzeugeinheiten angeordnet werden, z.B. indem die Halteeinrichtungen um den ganzzahligen Teil des Werkstückabstands in X-Richtung bewegt werden.

Der Werkstückabstand und/oder Querabstand ist insbesondere derart vorgegeben, dass der Zugang zu jedem Werkstück zur Fluidbearbeitung gewährleistet ist und das Werkstück oder die Werkstücke während der Fluidbearbeitung wie erforderlich ausgerichtet und positioniert werden kann bzw. können, so dass beispielsweise mehrere Werkstücke nicht in Kontakt miteinander gelangen. Beispielsweise können das wenigstens eine Werkstück um eine jeweilige individuelle Drehachse drehbar sein, die rechtwinklig zur X-Richtung ausgerichtet ist, z.B. in einer Y-Richtung.

Als Querabstand zwischen zwei Werkstücken kann die Distanz zwischen den gleichen Referenzstellen an den vorzugsweise unmittelbar in X-Richtung benachbarten Halteeinrichtungen verwendet werden. Als Referenzstelle kann beispielsweise ein geometrischer Mittelpunt oder die individuelle Drehachse verwendet werden.

Ein vorhandener Werkstückabstand und/oder Querabstand zweier Halteeinrichtungen ist beim Betrieb der Fluidbearbeitungsmaschine bzw. während der Durchführung des Verfahrens zur Fluidbearbeitung vorzugsweise unveränderlich und die Halteeinrichtungen haben den Werkstückabstand und/oder Querabstand nicht nur in der Bearbeitungsstellung, sondern auch in einer Werkstückwechselstellung.

Zumindest während des Betriebs der Fluidbearbeitungsmaschine oder alternativ auch im nicht betriebenen Zustand kann die Position der Fluidwerkzeugeinheiten in X-Richtung und/oder in Y-Richtung relativ zueinander und/oder relativ zum Werkzeugträger unveränderbar sein.

Zusätzlich zum Werkzeugträger mit den wenigstens zwei Fluidwerkzeugeinheiten, kann an der Arbeitskammer auch wenigstens ein weiteres Fluidwerkzeug angeordnet sein. Es können auch mehrere Werkzeugträger mit jeweils zwei oder mehr Fluidwerkzeugeinheiten vorhanden sein.

Die Fluidbearbeitungsmaschine weist ein Positioniersystem auf, um die an einem Werkzeugträger angeordneten Fluidwerkzeuge der wenigstens zwei Fluidwerkzeugeinheiten und das wenigstens eine zugeordnete Werkstück relativ zueinander zu positionieren und/oder zu bewegen. Das Positioniersystem kann durch die Steuereinrichtung angesteuert werden.

Das Positioniersystem hat vorzugsweise eine Trägerpositioniereinrichtung. Die Trägerpositioniereinrichtung kann dazu eingerichtet sein, den Werkzeugträger in X-Richtung und/oder in Y-Richtung zu bewegen und zu positionieren. Hierfür kann die Trägerpositioniereinrichtung durch die Steuereinrichtung angesteuert werden, so dass die Fluidwerkzeugeinheiten während der Bearbeitung des Werkstücks ihre gewünschte Position in X-Richtung bzw. Y-Richtung einnehmen. Vorzugsweise ist die Trägerpositioniereinrichtung dazu eingerichtet, den Werkzeugträger in X-Richtung und/oder Y-Richtung linear zu bewegen.

Das Positioniersystem hat bei einem bevorzugten Ausführungsbeispiel außerdem eine Werkzeugpositioniereinrichtung. Die Werkzeugpositioniereinrichtung ist zur Bewegung der wenigstens zwei Fluidwerkzeugeinheiten relativ zum Werkstückträger eingerichtet, insbesondere in einer Z-Richtung. Die Z-Richtung ist rechtwinklig zur X-Richtung und rechtwinklig zur Y-Richtung ausgerichtet. In Z-Richtung können die Fluidwerkzeugeinheiten weiter in die Arbeitskammer eingefahren oder aus einer in die Arbeitskammer eingefahrenen Stellung zurückgezogen werden. In Z-Richtung kann beispielsweise ein Annähern der Fluidwerkzeugeinheiten zu einem in der zugeordneten Halteeinrichtung gehaltenen Werkstück hin oder ein Entfernen von einem in der zugeordneten Halteeinrichtung gehaltenen Werkstück weg erfolgen.

Es ist vorteilhaft, wenn die Werkzeugpositioniereinrichtung ausschließlich zur Bewegung der Fluidwerkzeugeinheiten in Z-Richtung eingerichtet ist.

Vorzugsweise ist jeder Fluidwerkzeugeinheit genau eine in der Bearbeitungsstellung angeordnete Halteeinrichtung in der gemeinsamen Arbeitskammer zugeordnet.

Für die Bearbeitung des Werkstücks bzw. der Werkstücke wird das Positioniersystem und insbesondere die Werkzeugpositioniereinrichtung mittels einer Steuereinrichtung angesteuert, um die Relativposition und/oder Relativbewegung zwischen den Fluidwerkzeugeinheiten bzw. deren Fluidwerkzeugen und dem wenigstens einen Werkstück abgestimmt auf die jeweilige Bearbeitung des Werkstücks durchzuführen. Die Relativbewegungen zwischen Fluidwerkzeugen unterschiedlicher Fluidwerkzeugeinheiten und dem wenigstens einen zugeordneten Werkstück können zeitgleich erfolgen und können zeitgleich jeweils wenigstens einen Fluidstrahl auf das wenigstens eine Werkstück ausstoßen.

In einem Synchronarbeitsmodus der Steuereinrichtung kann das Positioniersystem derart gesteuert werden, dass sämtliche Relativbewegungen zwischen den Fluidwerkzeugeinheiten und dem wenigstens einen Werkstück synchron zueinander ausgeführt werden. Wenn die Fluidwerkzeuge relativ zum Werkzeugträger bewegbar sind, stimmen dabei die Position und Bewegung des wenigstens einen Fluidwerkzeugs einer der Fluidwerkzeugeinheiten jeweils überein mit der Position und Bewegung des wenigstens einen Fluidwerkzeugs der wenigstens einen weiteren Fluidwerkzeugeinheit. Mehrere Fluidwerkzeuge einer gemeinsamen Fluidwerkzeugeinheit können unterschiedliche Positionen einnehmen oder relativ zueinander bewegt werden. Alternativ oder zusätzlich kann auch die wenigstens eine Halteeinrichtung in der Arbeitskammer relativ zu den Fluidwerkzeugen in X-Richtung und/oder in Y-Richtung und/oder in Z-Richtung mittels des Positioniersystems bewegt werden - diese Bewegung kann bei mehreren Halteeinrichtungen synchron sein. Das wenigstens eine Werkstück mit sich in X-Richtung wiederholender Geometrie oder wiederholendem Muster oder mehrere Werkstücke können daher synchron mit jeweils wenigstens einem Fluidstrahl aus der zugeordneten Fluidwerkzeugeinheit bearbeitet werden. Auf diese Weise lassen sich im Synchronarbeitsmodus der Steuereinrichtung sehr effizient identische Werkstücke oder ein Werkstück mit sich wiederholenden Geometrien bearbeiten.

Die Fluidwerkzeugeinheiten werden vorzugsweise über die Steuereinrichtung zur Abgabe des wenigstens einen Fluidstrahls zur Werkstückbearbeitung gesteuert. Im Synchronarbeitsmodus werden die wenigstens zwei Fluidwerkzeugeinheiten insbesondere derart gesteuert, dass sie jeweils zur selben Zeit die gleiche Fluidbearbeitung an dem jeweils zugeordneten Werkstück ausführen, so dass die Werkstücke synchron bearbeitet werden.

Die Bewegung und Positionierung zwischen den Fluidwerkzeugeinheiten kann bei dieser Anordnung auf geringem Bauraum und mit wenig konstruktivem Aufwand erfolgen. Im einfachsten Fall genügt ein einziger Antrieb, beispielsweise Servomotor, um sämtliche Fluidwerkzeugeinheiten oder Halteeinrichtungen in Z-Richtung zu bewegen und zu positionieren. Wenn eine Bewegung und eine Positionierung in X-Richtung und/oder Y-Richtung erforderlich ist, kann diese Bewegung für alle Fluidwerkzeugeinheiten beispielsweise über den gemeinsamen Werkzeugträger oder einen gemeinsamen Träger (z.B. Drehteller) der Halteeinrichtungen erfolgen. Es sind daher lediglich wenige individuell ansteuerbare Maschinenachsen bzw. Antriebe notwendig, um die erforderlichen Bewegungen der Fluidwerkzeugeinheiten auszuführen. Das führt wiederum zu einem geringen Bauraumbedarf und einer kompakten Anordnung bei gleichzeitig hoher Positioniergenauigkeit.

Der Querabstand in X-Richtung zwischen unmittelbar benachbarten Fluidwerkzeugeinheiten kann anwendungsabhängig unveränderlich vorgegeben oder alternativ beim Einrichten oder Inbetriebnehmen der Fluidbearbeitungsmaschine eingestellt werden. Beispielsweise lassen sich dadurch die Positionen der Fluidwerkzeugeinheiten in X-Richtung an den Abstand der Halteeinrichtungen anpassen, der durch ein Werkstückhandhabungssystem einer Herstellungsanlage definiert sein kann. Dadurch lässt sich die Fluidbearbeitungsmaschine sehr einfach an bei der Herstellung von Werkstücken verwendete andere Maschinen anpassen und in Prozessabläufe integrieren. Die damit erreichte Flexibilität und der hohe Durchsatz verglichen mit dem konstruktiven Aufwand und dem für die Fluidbearbeitungsmaschine benötigten Aufstellraum bieten erhebliche Vorteile gegenüber bisherigen Lösungen.

Die Fluidbearbeitungsmaschine ist insbesondere dazu eingerichtet, das wenigstens eine Werkstück in der Arbeitskammer mit Fluidstrahlen, insbesondere Flüssigkeitsstrahlen, zu bearbeiten, wobei der Druck des wenigstens einen Fluidstrahls beim Ausstoßen abhängig von der Arbeitsaufgabe einstellbar ist. Insbesondere kann das wenigstens eine Werkstück entgratet und/oder gereinigt und/oder abgeblasen werden. Zum Entgraten kann wenigstens ein Fluidstrahl, vorzugsweise ein Flüssigkeitsstrahl (enthaltend z.B. Wasser, Schneidöl, Kühlschmiermittel), unter einem hohen Druck auf das Werkstück ausgestoßen werden, insbesondere auf eine oder mehrere Kanten, um dort einen vorhandenen Grat zu entfernen. Zum Reinigen oder Waschen kann wenigstens ein Fluidstrahl unter einem gegenüber dem Entgraten geringeren Druck auf das Werkstück ausgestoßen wird. Die erforderlichen Drücke können abhängig vom Material des zu bearbeitenden Werkstücks gewählt werden. Die Fluidbearbeitungsmaschine kann zusätzlich oder alternativ dazu eingerichtet sein, Werkstücke abzublasen, insbesondere mit einem Luftstrahl.

Der wenigstens eine Fluidstrahl wird durch die Fluidwerkzeugeinheiten gebildet. Hierfür wird jeder Fluidwerkzeugeinheit und insbesondere jedem Fluidwerkzeug das wenigstens eine erforderliche Fluid, insbesondere Wasser (mit oder ohne Reinigungsmittel) und/oder Schneidöl und/ oder eine andere Flüssigkeit und/oder Luft unter dem erforderlichen Druck zugeführt. Jede Fluidwerkzeugeinheit aufweist zumindest zwei Fluidwerkzeuge. Die Fluidwerkzeuge einer gemeinsamen Fluidwerkzeugeinheit können durch die Werkzeugpositioniereinrichtung in Z-Richtung unterschiedlich voneinander positioniert und/oder bewegt werden, so dass zum Beispiel immer ein Fluidwerkzeug einer gemeinsamen Fluidwerkzeugeinheit in eine Arbeitsstellung bewegt oder in der Arbeitsstellung positioniert ist.

Jedes Fluidwerkzeug kann mehrere Düsen und/oder Werkzeugteile für verschiedene Arbeitsaufgaben aufweisen. Die Düsen und/oder Werkzeugteile können relativ zum Werkstück und/oder einer sich in Z-Richtung erstreckenden Werkzeugachse ausrichtbar oder auch während der Bearbeitung bewegbar sein, beispielsweise drehbar um eine Drehachse angetrieben sein. Jedes Fluidwerkzeug kann einen oder mehrere Fluidkanäle aufweisen, zu der wenigstens einen Düse und/oder zu dem wenigstens einen Werkzeugteil führen und dort münden. Jeder Fluidkanal ist an eine Zufuhrleitung angeschlossen, um ein flüssiges und/oder gasförmiges Fluid unter dem erforderlichen Druck zum betreffenden Fluidkanal des Fluidwerkzeugs zuzuführen.

Es ist vorteilhaft, wenn die Werkzeugpositioniereinrichtung dazu eingerichtet ist, die Fluidwerkzeugeinheiten in Z-Richtung linear zu bewegen.

Jede Fluidwerkzeugeinheit weist wenigstens ein erstes Fluidwerkzeug und ein zweites Fluidwerkzeug auf. Optional können auch mehr als zwei Fluidwerkzeuge pro Fluidwerkzeugeinheit vorhanden sein. Es ist bevorzugt, wenn das erste Fluidwerkzeug und das zweite Fluidwerkzeug und optional weitere Fluidwerkzeuge in Y-Richtung übereinander oder nebeneinander angeordnet sind. Bei einem Ausführungsbeispiel kann die Y-Richtung vertikal ausgerichtet sein, so dass von einer Anordnung der Fluidwerkzeuge übereinander in jeder Fluidwerkzeugeinheit gesprochen werden kann. Ist die Y-Richtung horizontal ausgerichtet, sind die Fluidwerkzeuge einer gemeinsamen Fluidwerkzeugeinheit nebeneinander angeordnet. Alternativ hierzu wäre es auch möglich, die Fluidwerkzeugeinheiten in X-Richtung übereinander bzw. nebeneinander anzuordnen.

Es ist bevorzugt, wenn die Fluidwerkzeuge einer gemeinsamen Fluidwerkzeugeinheit miteinander bewegungsgekoppelt sind, so dass die Bewegung eines der Fluidwerkzeuge in Z-Richtung auch zu einer Bewegung des einen oder der mehreren anderen Fluidwerkzeuge derselben Fluidwerkzeugeinheit in Z-Richtung führt.

Bei einer Ausführungsform der Fluidbearbeitungsmaschine ist die Werkzeugpositioniereinrichtung dazu eingerichtet, eines der Fluidwerkzeuge einer Fluidwerkzeugeinheit in Z-Richtung rückwärts zu bewegen und gleichzeitig das jeweils andere der Fluidwerkzeuge in Z-Richtung vorwärts zu bewegen. Zwei paarweise zusammengehörende Fluidwerkzeuge einer gemeinsamen Fluidwerkzeugeinheit werden bei dieser Ausgestaltung vorzugsweise zu jedem Zeitpunkt gegenläufig bewegt.

Bei einem Ausführungsbeispiel ist die Werkzeugpositioniereinrichtung dazu eingerichtet, eines der Fluidwerkzeuge einer Fluidwerkzeugeinheit in einer Rückzugstellung zu bringen bzw. in dieser Rückzugstellung zu halten, wenn sich das jeweils andere Fluidwerkzeug in einer Arbeitsstellung befindet. Die Arbeitsstellung eines Fluidwerkzeugs ist die Stellung, in der das Fluidwerkzeug mit seiner Fluidaustrittsöffnung in die Arbeitskammer hineinragt und eine Position hat, in der ein Fluidstrahl zur Bearbeitung auf ein Werkstück gerichtet werden kann. Bevorzugt befindet sich jeweils nur ein Fluidwerkzeug einer gemeinsamen Fluidwerkzeugeinheit in der Arbeitsstellung, während sich das andere oder die anderen Fluidwerkzeuge derselben Fluidwerkzeugeinheit in ihrer jeweiligen Rückzugstellung befinden. In der Rückzugstellung eines Fluidwerkzeugs ist dieses nicht derart positioniert, einen Fluidbearbeitung auszuführen und ragt nicht oder möglichst wenig in die Arbeitskammer hinein. Jedes Fluidwerkzeug kann auch mehrere verschiedene Arbeitsstellungen und/oder mehrere verschiedene Rückzugstellungen einnehmen.

Die Werkzeugpositioniereinrichtung kann einen oder mehrere Antriebsstränge aufweisen. Sind mehrere Antriebsstränge vorhanden, sind diese vorzugsweise nicht mechanisch miteinander gekoppelt und/oder nicht mechanisch miteinander koppelbar. Separate Antriebsstränge sind vorzugsweise ausschließlich steuerungstechnisch koordiniert ansteuerbar. Ein Mittel zur mechanischen Antriebskopplung von separaten Antriebssträngen ist vorzugsweise nicht vorhanden. Jeder Antriebsstrang hat einen und vorzugsweise genau einen durch die Steuereinrichtung ansteuerbaren Antrieb. Jeder Antrieb kann ein elektrisch oder pneumatisch oder hydraulisch arbeitender Antrieb sein. Vorzugsweise ist der wenigstens eine Antrieb von einem rotatorisch antreibbaren Motor gebildet, beispielsweise einem Elektromotor, insbesondere einen Servomotor. Alternativ dazu kann ein Antrieb auch von einem ansteuerbaren Pneumatikzylinder oder einem ansteuerbaren Hydraulikzylinder gebildet sein. Unterschiedlichen Fluidwerkzeugen können auch unterschiedlich arbeitende Antriebe zugeordnet sein.

Die Werkzeugpositioniereinrichtung weist bei einem Ausführungsbeispiel einen einzigen ansteuerbaren Antrieb auf, der mit sämtlichen Fluidwerkzeugen antriebsgekoppelt ist oder antriebsgekoppelt werden kann. Der Aufwand im Hinblick auf den Bauraumbedarf und die Kosten kann auf diese Weise erheblich reduziert werden.

Es ist alternativ dazu auch möglich, dass die Werkzeugpositioniereinrichtung zwei oder mehr ansteuerbare Antriebsstränge bzw. Antriebe aufweist, so dass eine individuelle nicht fest gekoppelte Bewegung einzelner Fluidwerkzeuge und/oder einzelner Fluidwerkzeugeinheiten ermöglicht wird. Mehrere von der Steuereinrichtung ansteuerbare Antriebe können über die Steuereinrichtung koordiniert oder auch unabhängig voneinander gesteuert werden. Beispielsweise kann dadurch eine steuerungstechnische Bewegungskoppelung analog zu einer mechanischen Kopplung zwischen den einzelnen individuellen Antriebssträngen hergestellt werden.

Es ist vorteilhaft, wenn die Steuereinrichtung zusätzlich zu dem Synchronarbeitsmodus auch in einem Individualarbeitsmodus arbeiten kann. Insbesondere kann die Steuereinrichtung zwischen dem Synchronarbeitsmodus und dem Individualarbeitsmodus umgeschaltet werden.

Im Individualarbeitsmodus können beispielsweise ähnliche, aber nicht identische Werkstücke in der gemeinsamen Arbeitskammer bearbeitet werden. Dabei sind die Relativpositionen und/oder Relativbewegungen zwischen den Fluidwerkzeugeinheiten und dem wenigstens einen Werkstück voneinander verschieden, insbesondere die Relativpositionen und/oder Relativbewegungen in Z-Richtung. Für diese Ausgestaltung kann bei einem Ausführungsbeispiel die Werkzeugpositioniereinrichtung vorzugsweise mehrere Antriebsstränge auf, die unabhängig voneinander steuerbar sind. Alternativ dazu kann auch lediglich ein einziger Antriebsstrang vorhanden sein, bei dem ein einziger ansteuerbarer Antrieb im Individualarbeitsmodus der Steuereinrichtung lediglich mit einem Teil des Antriebsstrangs gekoppelt und von einem anderen Teil des Antriebsstrangs entkoppelt ist, beispielsweise mittels einer schaltbaren Kupplung der Positioniereinrichtung. Die Kupplung kann beispielsweise durch die Steuereinrichtung zwischen dem Kopplungszustand und dem Entkopplungszustand umgeschaltet werden.

Es ist möglich, die Steuereinrichtung während der Bearbeitung wenigstens eines Werkstücks in der Arbeitskammer zwischen dem Synchronarbeitsmodus und dem Individualarbeitsmodus umzuschalten, so dass gleiche Bearbeitungsabläufe synchron stattfinden, während dennoch individuelle Ausprägungen der Werkstückteile oder der Werkstücke berücksichtigt und im Individualarbeitsmodus durch die jeweils zugeordnete Fluidwerkzeugeinheit bearbeitet werden können. Beispielsweise können zwei oder mehr Werkstückteile eines Werkstücks oder zwei oder mehr Werkstücke in der Arbeitskammer im Synchronarbeitsmodus weitgehend synchron bearbeitet werden und lediglich während einer Phase, beispielsweise am Ende der Bearbeitung, kann wenigstens ein Werkstückteil oder Werkstück zusätzlich im Individualarbeitsmodus durch die jeweils zugeordnete Fluidwerkzeugeinheit bearbeitet werden. Während dieser Phase kann beispielsweise auch wenigstens eine Fluidwerkzeugeinheit inaktiv sein und stillstehen.

Es ist vorteilhaft, wenn die Halteeinrichtungen mittels einer Werkstückpositioniereinrichtung des Positioniersystems bewegbar und/oder positionierbar sind. Die Werkstückpositioniereinrichtung kann durch die Steuereinrichtung angesteuert werden. Mittels der Werkstückpositioniereinrichtung können die Werkstücke in den Halteeinrichtungen in der Arbeitskammer positioniert und/oder ausgerichtet werden. Bei einem Ausführungsbeispiel können die Halteeinrichtungen um eine individuelle Drehachse drehbar sein. Die individuellen Drehachsen können insbesondere parallel zueinander ausgerichtet sein, vorzugsweise in Y-Richtung. Bei einem weiteren Ausführungsbeispiel können die Halteeinrichtungen um eine gemeinsame Drehachse drehbar sein, die sich vorzugsweise in X-Richtung erstrecken kann.

Vorteilhafte Ausgestaltungen der Fluidbearbeitungsmaschine und des erfindungsgemäßen Verfahrens ergeben sich aus den abhängigen Ansprüchen, der Beschreibung und den Zeichnungen. Nachfolgend werden bevorzugte Ausführungsbeispiele der Erfindung anhand der beigefügten Zeichnungen im Einzelnen erläutert. In den Zeichnungen zeigen:
Figur 1 eine schematische, blockschaltbildähnliche Darstellung eines Ausführungsbeispiels einer Fluidbearbeitungsmaschine,
Figur 2 eine schematische, blockschaltbildähnliche Darstellung eines weiteren Ausführungsbeispiels einer Fluidbearbeitungsmaschine,
Figur 3 eine schematische, blockschaltbildähnliche Darstellung einer Anordnung von mehreren Fluidwerkzeugeinheiten mit jeweils zwei Fluidwerkzeugen für die Fluidbearbeitungsmaschine gemäß der Figuren 1 und 2,
Figur 4 eine schematische, blockschaltbildähnliche Darstellung einer alternativen Anordnung der Fluidwerkzeuge der Fluidwerkzeugeinheiten,
Figuren 5-9 jeweils eine schematische, blockschaltbildähnliche Darstellung unterschiedlicher Ausführungsbeispiele einer Werkzeugpositioniereinrichtung für das Bewegen und/oder Positionieren der Fluidwerkzeuge der Fluidwerkzeugeinheiten.

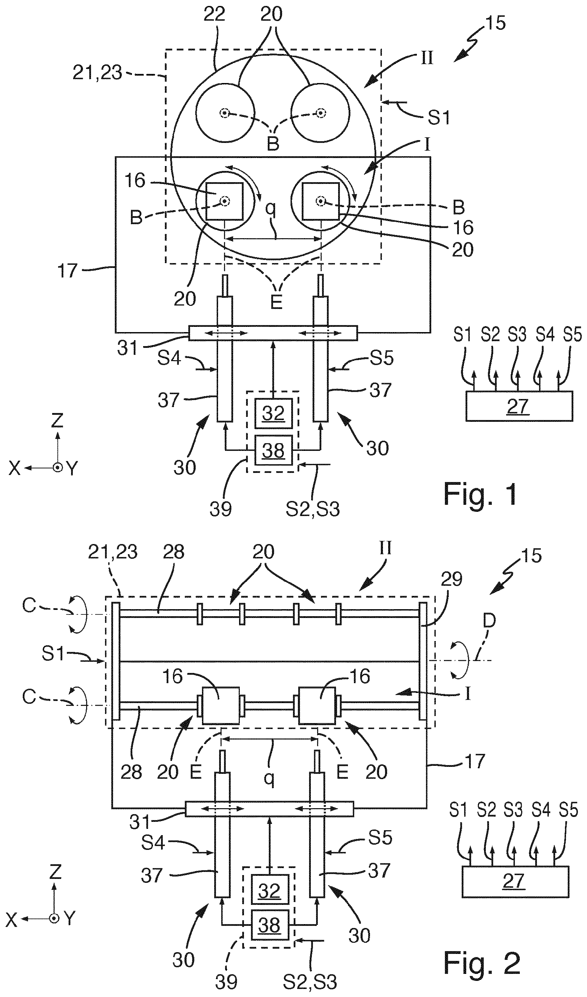

In den Figuren 1 und 2 sind schematisch Ausführungsbeispiele einer Fluidbearbeitungsmaschine 15 veranschaulicht. Die Fluidbearbeitungsmaschine 15 ist dazu eingerichtet, Werkstücke 16 mit wenigstens einem Fluidstrahl zu bearbeiten. Als Fluid kann abhängig von der Arbeitsaufgabe eine Flüssigkeit und/oder ein Gas eingesetzt werden, beispielsweise Wasser und/oder Luft. Mittels eines Flüssigkeitsstrahls können die Werkstücke 16 beispielsweise entgratet werden. Zum Entgraten wird der Flüssigkeitsstrahl unter einem sehr hohen Druck, beispielsweise bis zu 1100 bar, ausgestoßen und auf das Werkstück gerichtet. Im Anschluss an das Entgraten können die Werkstücke 16 gereinigt bzw. gewaschen werden, beispielsweise unter Abgabe eines oder mehrerer Fluidstrahlen mit verglichen zum Entgraten geringerem Druck von beispielsweise bis zu 200 bar, wobei der Flüssigkeit ein Reinigungsmittel beigemischt werden kann. Nach dem Reinigen können die Werkstücke 16 mit Luft abgeblasen werden. Die Arbeitsschritte des Entgratens, Waschens und Abblasens können wie beschrieben nacheinander an einem Werkstück 16 ausgeführt werden. Es versteht sich, dass auch lediglich ein der genannten Arbeitsschritte einzeln oder mehrere der genannten Arbeitsschritte in einer anderen Kombination ausgeführt werden können.

Die Fluidbearbeitungsmaschine 15 hat eine Arbeitskammer 17 innerhalb der wenigstens ein Werkstück 16 und vorzugsweise mehrere Werkstücke 16 bearbeitet werden können. Die Arbeitskammer 17 umschließt einen durchgehenden Innenraum zur Aufnahme des wenigstens einen Werkstücks 16.

Zum Aufspannen des wenigstens einen Werkstücks 16 weist die Fluidbearbeitungsmaschine 15 wenigstens eine und beispielsgemäß wenigstens zwei Halteeinrichtungen 20 auf. Jede Halteeinrichtung 20 ist dazu eingerichtet, ein einziges zugeordnetes Werkstück 16 aufzunehmen. Beim Ausführungsbeispiel sind die Halteeinrichtungen 20 Bestandteil eines Werkstückhandhabungssystems 21. Mittels des Werkstückhandhabungssystems 21 können wenigstens zwei Halteeinrichtungen 20 im Innenraum der Arbeitskammer 17 in eine Bearbeitungsstellung I und wenigstens zwei Halteeinrichtungen 20 außerhalb der Arbeitskammer 17 in einer Werkstückwechselstellung II angeordnet werden.

Bei dem in Figur 1 veranschaulichten Ausführungsbeispiel weist das Werkstückhandhabungssystem 21 eine Wechseleinrichtung in Form eines Drehtellers 22 auf, auf dem die Halteeinrichtungen 20 angeordnet sind. Ein Teil des Drehtellers 22 befindet sich innerhalb der Arbeitskammer 17, während ein anderer Teil des Drehtellers 22 außerhalb der Arbeitskammer 17 ist. Ein Wandabschnitt der Arbeitskammer kann sich entlang der Drehachse des Drehtellers 22 erstrecken und auf dem Drehteller 22 befestigt sein. Beispielsgemäß kann der Drehteller 22 in zwei Drehstellungen gebracht werden, die um die Drehachse des Drehtellers 22 um 180° versetzt sind. In jeder Drehstellung des Drehtellers 22 befindet sich wenigstens eine und beispielsgemäß zwei Halteeinrichtungen 20 in der Bearbeitungsstellung I innerhalb der Arbeitskammer 17, während die wenigstens eine andere Halteeinrichtung 20 in der Werkstückwechselstellung II außerhalb der Arbeitskammer 17 angeordnet ist. Vorzugsweise ist die Anzahl der Halteeinrichtungen 20 in der Bearbeitungsstellung I gleich groß wie die Anzahl der Halteeinrichtungen 20 in der Werkstückwechselstellung II.

Die wenigstens eine in der Bearbeitungsstellung I angeordneter Halteeinrichtung 20 hält jeweils ein Werkstück 16 im Innenraum der Arbeitskammer 17 zur Fluidbearbeitung. Beispielsgemäß weisen die in der Bearbeitungsstellung I angeordneten Halteeinrichtungen 20 in einer X-Richtung einen Querabstand q zueinander auf. Der Querabstand q wird in X-Richtung zwischen zwei Referenzpunkten - beispielsweise Mittelpunkten - der Halteeinrichtungen 20 gemessen. Die Halteeinrichtungen 20 können jeweils um eine individuelle Drehachse B drehbar sein, die sich durch die Mittelpunkte der Halteeinrichtungen 20 erstreckt und parallel zu einer Y-Richtung ausgerichtet ist. Die Y-Richtung ist rechtwinklig zur X-Richtung orientiert. Die Drehachse, um die der Drehteller 22 drehbar ist, ist ebenfalls in Y-Richtung ausgerichtet.

Bei den hier beschriebenen Ausführungsbeispielen der Fluidbearbeitungsmaschine 15 ist die Y-Richtung vertikal orientiert. Die Y-Richtung könnte auch horizontal ausgerichtet sein. Die individuellen Drehachsen B jeder Halteeinrichtung 20 können auch zur Positionierung bzw. Orientierung der Werkstücke 16 verwendet werden, wenn sich die Werkstücke 16 in der Arbeitskammer 17 befinden, wenn also die zugeordnete Halteeinrichtung 20 in der Bearbeitungsstellung I ist. Somit kann das Werkstückhandhabungssystem 21 auch die Funktion einer Werkstückpositioniereinrichtung 23 erfüllen. Zusätzlich zur Rotation um die jeweilige individuelle Drehachse B können die Halteeinrichtungen 20 relativ zur Arbeitskammer 17 auch in einem oder mehreren weiteren Freiheitsgraden bewegbar bzw. positionierbar sein, beispielsweise um eine in X-Richtung und/oder eine in einer Z-Richtung verlaufende Achse geneigt oder gedreht werden. Die Z-Richtung ist dabei rechtwinklig zur X-Richtung und rechtwinklig zur Y-Richtung ausgerichtet.

Die Werkstückpositioniereinrichtung 23 kann in Abwandlung zu dem hier veranschaulichten Ausführungsbeispiel auch unabhängig von einem Werkstückhandhabungssystem 21 vorhanden sein. Beispielsweise kann die wenigstens eine Halteeinrichtung 20 in der Arbeitskammer 17 installiert und dort mittels der Werkstückpositioniereinrichtung 23 bewegt bzw. ausgerichtet werden, insbesondere während der Bearbeitung wenigstens eines Werkstücks 16. Das Zuführen von zu bearbeitenden Werkstücken 16 in die Arbeitskammer 17 und das Entnehmen von bearbeiteten Werkstücken 16 aus der Arbeitskammer 17 erfolgt dabei über ein separates Werkstückhandhabungssystem 21, beispielsweise Roboter oder andere Manipulatoren. Durch die beispielsgemäß zusätzlichen Halteeinrichtungen 20, die sich in der Werkstückwechselstellung II befinden, können die Zeitdauern zwischen dem Ende einer Werkstückbearbeitung und dem Beginn der Bearbeitung eines weiteren Werkstücks in der Arbeitskammer 17 minimiert werden.

Beim Ausführungsbeispiel wird das Werkstückhandhabungssystem 21 und somit auch die Werkstückpositioniereinrichtung 23 durch eine Steuereinrichtung 27 angesteuert. Die Ansteuerung ist in den Figuren 1 und 2 schematisch durch das erste Steuersignal S1 symbolisch dargestellt.

In Figur 2 ist eine alternative Ausführungsform des Werkstückhandhabungssystems 21 und der Werkstückpositioniereinrichtung 23 veranschaulicht. Das Werkstückhandhabungssystem 21 weist eine Werkstückwechseleinrichtung mit mehreren sich in X-Richtung erstreckende Querstreben 28 auf. An jeder Querstrebe 28 sind mehrere und beispielsgemäß zwei Halteeinrichtungen 20 unter dem Querabstand q in X-Richtung angeordnet. Jede Querstrebe 28 ist um eine sich in X-Richtung erstreckende Drehachse drehbar, die somit eine gemeinsame Drehachse C für alle an der Querstrebe 28 angeordneten Halteeinrichtungen 20 bildet. Die gemeinsame Drehachse C gehört zur Werkstückpositioniereinrichtung 23, so dass die in der Bearbeitungsstellung I positionierten Werkstücke 16 für die Fluidbearbeitung oder während der Fluidbearbeitung in die jeweils gewünschte Drehstellung um die gemeinsame Drehachse C gebracht werden können.

Die Werkstückwechseleinrichtung des Werkstückhandhabungssystems 21 bzw. der Werkstückpositioniereinrichtung 23 weist außerdem eine Basis 29 auf, an der die Querstreben 28 jeweils drehbar gelagert sind. Die Basis 29 wiederum ist um eine sich parallel zu den Querstreben 28 bzw. parallel zu den gemeinsamen Drehachsen C erstreckenden Basisachse D drehbar bzw. schwenkbar. Durch eine Drehung um diese Basisachse D können die Halteeinrichtungen 20 zwischen der Bearbeitungsstellung I in der Arbeitskammer 17 und der Werkstückwechselstellung II außerhalb der Arbeitskammer 17 bewegt werden, beispielsweise durch eine Drehung der Basis 29 um 180° um die Basisachse D.

In Abwandlung hierzu kann die Basisachse D auch in Y-Richtung und somit rechtwinkelig zu den gemeinsamen Drehachsen C ausgerichtet sein.

Wie auch schon im Zusammenhang mit der Ausführungsform nach Figur 1 erläutert, können auch beim Ausführungsbeispiel gemäß Figur 2 das Werkstückhandhabungssystem 21 und die Werkstückpositioniereinrichtung 23 separat voneinander ausgebildet sein. Beispielsweise kann zu diesem Zweck eine Querstrebe 28 mit mehreren Halteeinrichtungen 20 um die gemeinsame Drehachse C drehbar in der Arbeitskammer 17 angeordnet sein ohne die Möglichkeit, die Querstrebe 28 aus der Bearbeitungsstellung I in eine Werkstückwechselstellung II bewegen zu können.

Bei allen Ausführungsformen der Fluidbearbeitungsmaschine 15 sind mehrere Fluidwerkzeugeinheiten 30 vorhanden. Die Anzahl der Fluidwerkzeugeinheiten 30 entspricht vorzugsweise der Anzahl der Halteeinrichtungen 20, die sich in der Bearbeitungsstellung I in der Arbeitskammer 17 befinden. Jeder Halteeinrichtung 20 kann dann genau eine Fluidwerkzeugeinheit 30 zugeordnet sein. Jeder Fluidwerkzeugeinheit 30 kann stets eine Halteeinrichtung 20 zugeordnet sein, wenn die Anzahl der Halteeinrichtungen 20 in der Arbeitskammer 17 größer ist als die Anzahl der Fluidwerkzeugeinheiten 20.

Die Anzahl der Halteeinrichtungen 20, die sich in der Bearbeitungsstellung I in der Arbeitskammer 17 befindet, kann beispielsweise auch ein ganzzahliges Vielfaches der Anzahl der Fluidwerkzeugeinheiten 30 betragen. Dann befindet sich immer nur ein Teil der Halteeinrichtungen 20 vor den Fluidwerkzeugeinheiten 30 zur Bearbeitung. In diesem Fall kann der Werkstückabstand von in X-Richtung unmittelbar benachbarten Halteeinrichtungen 20 bzw. Werkstücken 16 ein ganzzahliger Teil des Querabstandes q sein.

Das in einer Halteeinrichtung 20 in der Bearbeitungsstellung I gehaltene Werkstück 16 wird beispielsgemäß mittels genau einer zugeordneten Fluidwerkzeugeinheit 30 fluidisch bearbeitet. Ein Wechsel der Werkstücke 16 zwischen den verschiedenen Fluidwerkzeugeinheiten 30 oder eine Bewegung der Fluidwerkzeugeinheiten 30 zwischen den Werkstücken 16 findet während der Bearbeitung in der Arbeitskammer 17 vorzugsweise nicht statt.

Bei den beschriebenen Ausführungsformen der Fluidbearbeitungsmaschine 15 kann auch lediglich ein Werkstück 16 mit größerer Länge in X-Richtung durch beide Fluidwerkzeugeinheiten 30 gleichzeitig bearbeitet werden, insbesondere ein Werkstück, das zwei mit Querabstand q in X-Richtung angeordnete Werkstückteile mit derselben oder mit ähnlicher Geometrie aufweist, wie z.B. eine Kurbelwelle.

Die Fluidwerkzeugeinheiten 30 sind beispielsgemäß in X-Richtung nebeneinander angeordnet. Zwei unmittelbar benachbarte Fluidwerkzeugeinheiten 30 haben dabei den Querabstand q, den auch die Halteeinrichtungen 20 und/oder die Werkstücke 16 und/oder Werkstückteile eines gemeinsamen Werkstücks aufweisen. Der Querabstand q der Fluidwerkzeugeinheiten 30 entspricht dem Abstand der Mittellängsebenen durch die jeweilige Fluidwerkzeugeinheit 30, die rechtwinklig zur X-Richtung ausgerichtet sind.

Die Fluidwerkzeugeinheiten 30 sind an einem gemeinsamen Werkzeugträger 31 angeordnet. Die an dem gemeinsamen Werkzeugträger 31 angeordneten Fluidwerkzeugeinheiten 30 sind insbesondere an einer einzigen Seite bzw. Wand der Arbeitskammer 17 angeordnet. Der Werkzeugträger 31 gibt die Position der daran angeordneten Fluidwerkzeugeinheiten 30 relativ zur Arbeitskammer 17 in zwei Raumrichtungen vor, beispielsgemäß in X-Richtung und Y-Richtung. Der Werkzeugträger 31 kann unbeweglich gegenüber der Arbeitskammer 17 gelagert sein. Der Werkzeugträger 31 kann alternativ dazu in einem oder mehreren Freiheitsgraden relativ zur Arbeitskammer 17 bewegbar gelagert sein, insbesondere in einem oder mehreren linearen Freiheitsgraden. Bei dem hier veranschaulichten Ausführungsbeispiel kann der Werkzeugträger 31 beispielsweise linear in X-Richtung und linear in Y-Richtung bewegbar gelagert sein. Vorzugsweise hat der Werkzeugträger 31 keine rotatorischen Freiheitsgrade.

Über den Werkzeugträger 31 sind die daran angeordneten Fluidwerkzeugeinheiten 30 in X-Richtung und Y-Richtung relativ zueinander unbeweglich gelagert (zumindest während des Betriebs der Fluidbearbeitungsmaschine 15). Über den Werkzeugträger 31 werden die Fluidwerkzeugeinheiten 30 im Block als gemeinsame Baugruppe in X-Richtung und Y-Richtung angeordnet und optional, wie beim Ausführungsbeispiel, in X-Richtung und/oder Y-Richtung bewegt. Zur Bewegung des Werkzeugträgers 31 in X-Richtung und/oder Y-Richtung weist die Fluidbearbeitungsmaschine 15 eine Trägerpositioniereinrichtung 32 auf, die mittels der Steuereinrichtung 27 ansteuerbar ist. Zur Ansteuerung der Trägerpositioniereinrichtung 32 kann die Steuereinrichtung 27 ein zweites Steuersignal S2 erzeugen, wie es symbolisch in den Figuren 1-3 veranschaulicht ist.

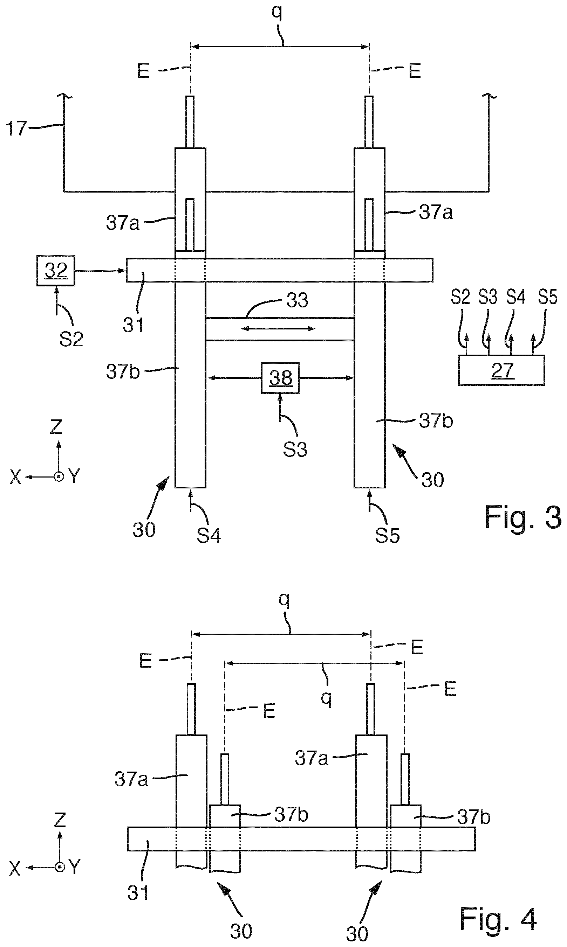

Während dem Betrieb der Fluidbearbeitungsmaschine 15 und insbesondere während der Bearbeitung von Werkstücken 16 ändert sich der Querabstand q nicht, unter dem die Fluidwerkzeugeinheiten 30 in X-Richtung angeordnet sind. Wie es schematisch in Figur 3 veranschaulicht ist, kann der Querabstand q zwischen den Fluidwerkzeugeinheiten 30 mithilfe einer Einstelleinrichtung 33 einstellbar sein, z.B. im Rahmen eines Einstell- oder Inbetriebnahmeprozesses zur Anpassung an eine bevorstehende Arbeitsaufgabe. Die Einstelleinrichtung 33 kann beispielsweise manuell betätigbar sein. Alternativ hierzu kann die Einstelleinrichtung 33 einen von der Steuereinrichtung 27 ansteuerbaren Aktor aufweisen.

Jede Fluidwerkzeugeinheit 30 weist mehr als ein Fluidwerkzeug 37 auf, beispielsweise ein erstes Fluidwerkzeug 37a und ein zweites Fluidwerkzeug 37b (Figuren 3-9). Während die Fluidwerkzeugeinheiten 30 in X-Richtung und in Y-Richtung während der Bearbeitung der Werkstücke 16 relativ zueinander unbeweglich an dem gemeinsamen Werkzeugträger 31 angeordnet sind, können die Fluidwerkzeuge 37 der Fluidwerkzeugeinheiten 30 in Z-Richtung relativ zum Werkzeugträger 31 und mithin relativ zur Arbeitskammer 17 bewegt und in eine gewünschte Position gebracht werden. Hierzu weist die Fluidbearbeitungsmaschine eine Werkzeugpositioniereinrichtung 38 auf, mittels der die Fluidwerkzeuge 37 in Z-Richtung bewegbar und positionierbar sind.

Vorzugsweise ist die Werkzeugpositioniereinrichtung 38 dazu eingerichtet, die Fluidwerkzeuge 37 ausschließlich linear in Z-Richtung zu bewegen. Weitere Bewegungen in anderen Freiheitsgraden sind mittels der Werkzeugpositioniereinrichtung 38 nicht möglich.

Die Werkzeugpositioniereinrichtung 38 ist durch die Steuereinrichtung 27 ansteuerbar, was in den Figuren 1-3 schematisch durch ein drittes Steuersignal S3 symbolisiert ist.

Die Werkzeugpositioniereinrichtung 38 und die Trägerpositioniereinrichtung 32 sind Teil eines Positioniersystems 39, das beispielsgemäß den Fluidwerkzeugen 37 der Fluidwerkzeugeinheiten 30 zugeordnet ist und zur Bewegung und Positionierung der Fluidwerkzeuge 37 der Fluidwerkzeugeinheiten 30 eingerichtet ist. Alternativ oder zusätzlich können die Bewegungen zwischen den Fluidwerkzeugen 37 der Fluidwerkzeugeinheiten 30 auch durch die Werkstückpositioniereinrichtung 23 vorgenommen werden, die ebenfalls Bestandteil des Positioniersystems 39 sein kann.

Das Positioniersystem 39 und zumindest die Werkzeugpositioniereinrichtung 38 und die Trägerpositioniereinrichtung 32 sind vorzugsweise frei von rotatorischen Maschinenachsen und weist lediglich lineare Maschinenachsen zur Bewegung der Fluidwerkzeuge 37 in den drei linearen Freiheitsgraden (X-Richtung, Y-Richtung, Z-Richtung) relativ zur Arbeitskammer 17 auf. Dadurch ist eine hohe Positioniergenauigkeit erreichbar.

Vorzugsweise weisen sämtliche Fluidwerkzeugeinheiten 30 dieselbe Anzahl an Fluidwerkzeugen 37 auf. Wenn eine Fluidwerkzeugeinheit 30 mehrere Fluidwerkzeuge 37 aufweist, beispielsweise ein erstes Fluidwerkzeug 37a und ein zweites Fluidwerkzeug 37b (Figuren 3 und 4), sind die Fluidwerkzeuge 37a, 37b entlang einer Richtung nebeneinander oder übereinander angeordnet, vorzugsweise in Y-Richtung. Das Anordnen der Fluidwerkzeuge 37a, 37b nebeneinander oder übereinander ist insbesondere derart, dass rechtwinklig zu dieser Anordnungsrichtung, beispielsgemäß in X-Richtung, kein Versatz zwischen den Fluidwerkzeugen 37a, 37b einer gemeinsamen Fluidwerkzeugeinheit 30 besteht.

In Z-Richtung können die Fluidwerkzeuge 37a, 73b einer gemeinsamen Fluidwerkzeugeinheit 30 unterschiedlich positioniert sein und insbesondere unterschiedlich weit in die Arbeitskammer 17 hineinragen. Vorzugsweise befindet sich von jeder Fluidwerkzeugeinheit 30 lediglich ein Fluidwerkzeug 37a oder 37b in einer Arbeitsstellung zur Bearbeitung des zugeordneten Werkstücks 16, während das jeweils andere Fluidwerkzeug 37b oder 37a eine Rückzugstellung einnimmt, in der es weiter vom zugeordneten Werkstück 16 entfernt ist als das Fluidwerkzeug, das sich in der Arbeitsstellung befindet. In den Figuren 3 und 4 ist schematisch dargestellt, dass sich jeweils das erste Fluidwerkzeug 37a in der Arbeitsstellung befindet, während jeweils das zweite Fluidwerkzeug 37b eine Rückzugstellung einnimmt. In der Rückzugstellung kann ein Fluidwerkzeug vollständig außerhalb der Arbeitskammer 17 angeordnet sein, was allerdings nicht zwingend erforderlich ist.

In Figur 4 ist schematisch ein Ausführungsbeispiel zur Anordnung der Fluidwerkzeuge 37a, 37b einer jeweiligen Fluidwerkzeugeinheit 30 veranschaulicht, bei der die Fluidwerkzeuge 37a, 37b in X-Richtung nebeneinander angeordnet sind. In diesem Fall wird der Querabstand q jeweils zwischen den Längsmittelebenen E durch die beiden ersten Fluidwerkzeuge 37a unmittelbar benachbarter Fluidwerkzeugeinheiten 30 sowie zwischen den beiden zweiten Fluidwerkzeugen 37b der unmittelbar benachbarten Fluidwerkzeugeinheiten 30 gemessen.

In Abwandlung zu den dargestellten Ausführungsbeispielen ist es auch möglich, die Fluidwerkzeuge 37a, 37b einer gemeinsamen Fluidwerkzeugeinheit 30 in Y-Richtung nebeneinander oder übereinander und dabei in X-Richtung mit Versatz zueinander anzuordnen. Der Querabstand q wird dann analog zu der Illustration in Figur 4 zwischen den jeweiligen Längsmittelebenen E rechtwinklig zur X-Richtung bestimmt.

Zur Bearbeitung der Werkstücke 16 in der Arbeitskammer 17 werden die Fluidwerkzeugeinheiten 30 durch die Steuereinrichtung 27 angesteuert, was in den Figuren 1-3 schematisch anhand eines vierten Steuersignals S4 und eines fünften Steuersignals S5 für die Fluidwerkzeugeinheiten 30 veranschaulicht ist. Das wenigstens eine Fluidwerkzeug 37 jeder Fluidwerkzeugeinheit 30 wird während der Bearbeitung des zugeordneten Werkstücks 16 zur Abgabe wenigstens eines Fluidstrahls angesteuert. Mittels des Fluidstrahls kann das zugeordnete Werkstück 16 bearbeitet werden, z.B. entgratet oder gereinigt oder abgeblasen werden. Abhängig von der Arbeitsaufgabe kann das jeweils geeignete Fluidwerkzeug 37 einer Fluidwerkzeugeinheit 30 ausgewählt und angesteuert werden. Zum Beispiel können die Fluidwerkzeuge 37 einer Fluidwerkzeugeinheit 30 mit unterschiedlichen Fluiden und/oder unterschiedlichen Drücken des abgegebenen Fluids und/oder unterschiedlichen Düsen zur Abgabe des wenigstens einen Fluidstrahls arbeiten. Dabei kann ein Werkzeugwechsel sehr schnell dadurch erfolgen, dass das gewünschte Fluidwerkzeug 37 in die Arbeitsstellung und das wenigstens eine andere, nicht benötigte Fluidwerkzeug 37 in eine Rückzugstellung gebracht wird. Durch diese Ausgestaltung kann auf zusätzliche Werkzeugrevolver, Greifer oder andere Werkzeugwechseleinrichtungen verzichtet werden.

Jedes Fluidwerkzeug 37 kann mehrere Düsen und/oder Werkzeugteile für verschiedene Arbeitsaufgaben aufweisen. Die Düsen und/oder Werkzeugteile können relativ zum Werkstück 16 ausrichtbar oder auch während der Bearbeitung bewegbar sein, beispielsweise drehbar um eine Drehachse angetrieben sein. Jedem Fluidwerkzeug 37 können unterschiedliche Fluide und/oder Fluide mit unterschiedlichen Drücken bereitgestellt werden, die mit der jeweils aktuelle verwendeten Düse und/oder dem aktuell verwendeten Werkzeugteil ausgestoßen werden.

Die Steuereinrichtung 27 kann zumindest zeitweise in einem Synchronarbeitsmodus arbeiten, in dem sämtliche Fluidwerkzeugeinheiten 30 synchron gesteuert bzw. betrieben werden, so dass das wenigstens eine in der Arbeitskammer 17 angeordnete Werkstück 16 synchron, d.h. zeitgleich und mit identischen Arbeitsabläufen bearbeitet wird. Auf diese Weise können in der Arbeitskammer 17 identische oder zumindest teilweise identische Werkstücke 16 oder ein Werkstück mit identischen oder zumindest teilweise identischen Werkstückteilen effizient bearbeitet werden.

Es ist optional möglich, die Steuereinrichtung 27 vom Synchronarbeitsmodus in einen Individualarbeitsmodus umzuschalten. Im Individualarbeitsmodus können die vorhandenen Fluidwerkzeugeinheiten 30 unterschiedlich gesteuert werden im Hinblick auf die Bewegung und/oder die Position ihrer Fluidwerkzeuge 37 und/oder im Hinblick auf die Abgabe wenigstens eines Fluidstrahls durch die Fluidwerkzeuge 37. Während des Individualarbeitsmodus arbeiten die Fluidwerkzeugeinheiten 30 nicht synchron, sondern voneinander verschieden, wobei auch lediglich nur eine oder zumindest nicht alle der vorhandenen Fluidwerkzeugeinheiten 30 aktiv sein können. Beispielsweise kann während des Individualarbeitsmodus die Position des wenigstens einen Fluidwerkzeugs 37 einer oder mehrerer Fluidwerkzeugeinheiten 30 unveränderlich beibehalten werden, während das wenigstens eine Fluidwerkzeug 37 einer oder mehrerer anderer Fluidwerkzeugeinheiten 30 während des Individualarbeitsmodus in Z-Richtung bewegt oder positioniert wird und zur Bearbeitung des zugeordneten Werkstücks 16 oder Werkstückteils wenigstens einen Fluidstrahl ausstößt.

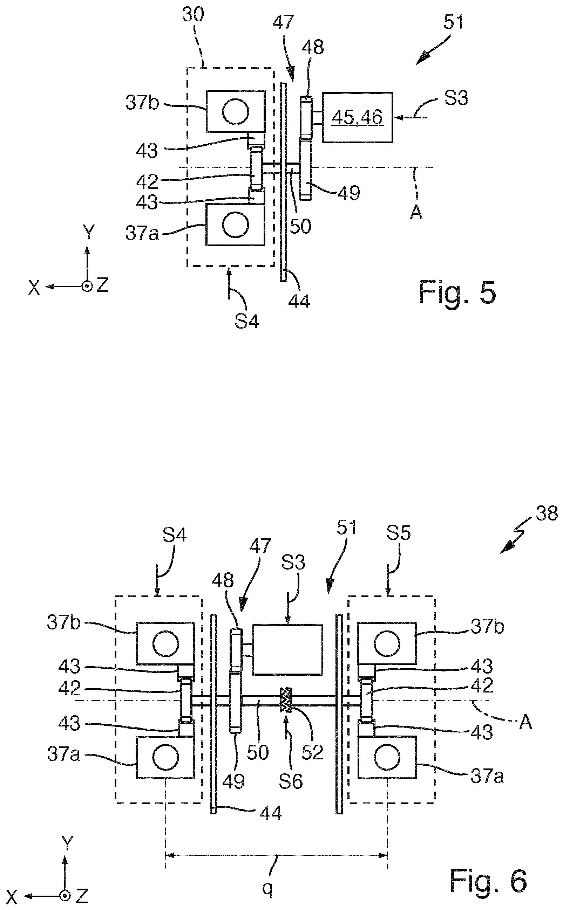

Die Kopplung mehrerer Fluidwerkzeuge 37 einer gemeinsamen Fluidwerkzeugeinheit 30 und/oder verschiedener Fluidwerkzeugeinheiten 30 eines kann auf unterschiedliche Weise geschehen. Beispielsweise kann die Kopplung steuerungstechnisch oder mechanisch hergestellt werden. In den Figuren 5-9 sind unterschiedliche Ausführungsformen der Ausgestaltung der Werkzeugpositioniereinrichtung 38 schematisch veranschaulicht. Die Ausgestaltungen werden basierend auf Fluidwerkzeugeinheiten 30 erläutert, die jeweils ein erstes Fluidwerkzeug 37a und ein zweites Fluidwerkzeug 37b aufweisen. In Abwandlung zu den dargestellten Ausführungsbeispielen kann jede Fluidwerkzeugeinheit 30 auch mehr als zwei Fluidwerkzeuge 37 aufweisen.

Bei den hier beschriebenen bevorzugten Ausführungsbeispielen erfolgt die Kopplung des ersten Fluidwerkzeugs 37a und des zweiten Fluidwerkzeugs 37b einer gemeinsamen Fluidwerkzeugeinheit 30 derart, dass jeweils eines der Fluidwerkzeuge 37a oder 37b in Z-Richtung nach vorne und das jeweils andere Fluidwerkzeug 37b oder 37a in Z-Richtung nach hinten (vom zugeordneten Werkstück 16 weg) bewegt wird. Dadurch ist es möglich, das eine Fluidwerkzeug in die Arbeitsstellung und das jeweils andere Fluidwerkzeug in die Rückzugstellung zu bringen. Die Fluidwerkzeuge 37a, 37b einer gemeinsamen Fluidwerkzeugeinheit 30 bewegen sich stets gegenläufig.

Ein Ausführungsbeispiel zur mechanischen Kopplung des ersten Fluidwerkzeugs 37a und des zweiten Fluidwerkzeugs 37b ist in Figur 5 dargestellt. Die Kopplung kann beispielsweise über ein gemeinsames Antriebszahnrad 42 und damit in Eingriff stehende Zahnstangen 43 erfolgen. Jedes Fluidwerkzeug 37a, 37b weist dazu eine sich in Z-Richtung erstreckende Zahnstange 43 auf. Die Zahnstangen 43 liegen sich gegenüber, beispielsgemäß in Y-Richtung. Sie stehen mit dem dazwischen angeordneten, gemeinsamen Antriebszahnrad 42 in Eingriff.

Das Antriebszahnrad 42 ist drehbar um eine Antriebsachse A gelagert, die in X-Richtung ausgerichtet ist. In Z-Richtung ist das Antriebszahnrad 42 gegenüber dem Werkzeugträger 31 bzw. der Arbeitskammer 17 unbeweglich an einem Lagerteil 44 gelagert. Das Lagerteil 44 ist insbesondere Bestandteil des Werkzeugträgers 31.

Das Antriebszahnrad 42 ist mit einem zugeordneten Antrieb 45 antriebsverbunden. Der Antrieb 45 ist beim Ausführungsbeispiel durch einen Servomotor 46 gebildet. Als Antrieb 45 könnte alternativ auch ein pneumatischer Antrieb oder ein hydraulischer Antrieb verwendet werden. Der Antrieb 45 bzw. der Servomotor 46 wird durch die Steuereinrichtung 27 angesteuert, beispielsweise mittels des dritten Steuersignals S3.

Die Antriebskopplung zwischen dem Servomotor 46 und dem Antriebszahnrad 42 erfolgt beispielsgemäß unter Zwischenschaltung einer Getriebestufe 47 mit einem ersten Getrieberad 48 und einem zweiten Getrieberad 49. Das erste Getrieberad 48 ist drehfest mit dem Antrieb 45 und beispielsgemäß dem Servomotor 46 verbunden. Das zweite Getrieberad 49 ist drehfest mit dem Antriebszahnrad 42 verbunden, beispielsweise mittels einer Antriebswelle 50, die sich entlang der Antriebsachse A erstreckt. Beim Ausführungsbeispiel sind die Getrieberäder 48, 49 als Zahnräder ausgebildet, die unmittelbar miteinander in Eingriff stehen. Alternativ dazu könnten die Getrieberäder 48, 49 auch reibschlüssig aneinander anliegen oder über einen Riemen, insbesondere Zahnriemen, miteinander gekoppelt sein.

Durch Betätigung des Antriebs 45 kann das Antriebszahnrad 42 in eine Drehbewegung um die Antriebsachse A versetzt werden, so dass sich die damit in Eingriff stehenden Zahnstangen 43 linear in Z-Richtung gegenläufig zueinander bewegen. Abhängig von der Drehrichtung des Antriebszahnrades 42 bewegt sich das erste Fluidwerkzeug 37a auf das zu bearbeitende Werkstück 16 zu und das zweite Fluidwerkzeug 37b vom zu bearbeitenden Werkstück 16 weg oder umgekehrt.

Grundsätzlich weist die Werkzeugpositioniereinrichtung 38 wenigstens einen Antriebsstrang 51 mit jeweils wenigstens einem ansteuerbaren Antrieb 45 und wenigstens einer Antriebswelle 50 auf. Ein einziger Antriebsstrang 51 ist ausreichend. Innerhalb eines Antriebsstrangs 51 kann eine mechanische Antriebskopplung zwischen dem Antrieb 45 und dem wenigstens einen angetriebenen Fluidwerkzeug 37 hergestellt werden oder besteht dauerhaft. Mehrere separate Antriebsstränge können vorhanden sein und sind vorzugsweise ausschließlich steuerungstechnisch gekoppelt. Ein Mittel zur mechanischen Zwangskopplung von separaten Antriebssträngen ist vorzugsweise nicht vorhanden.

Der in Figur 5 dargestellte Antriebsstrang 51 kann gleichzeitig für mehrere Fluidwerkzeugeinheiten 30 verwendet werden, indem auf der Antriebswelle 50 entlang der Antriebsachse A mehrere Antriebszahnräder 42 angeordnet werden, die mit den Zahnstangen 43 der Fluidwerkzeuge 37a, 37b der betreffenden Fluidwerkzeugeinheit 30 in Eingriff stehen, wie es in Figur 6 beispielhaft für zwei Fluidwerkzeugeinheiten 30 dargestellt ist. Die Anordnung lässt sich aber beliebig auf mehr als zwei Fluidwerkzeugeinheiten 30 erweitern. Da der Aufbau des Antriebsstrangs 51 gemäß Figur 6 im Wesentlichen dem Aufbau des Antriebsstrangs 51 aus Figur 5 entspricht, kann auf die vorstehende Beschreibung verwiesen werden.

Als optionale Ausführung kann in der Antriebswelle 50 zwischen dem zweiten Getrieberad 49 und einem Antriebszahnrad 42 einer der Fluidwerkzeugeinheiten 30 eine schaltbare Kupplung 52 angeordnet sein. Die schaltbare Kupplung 52 kann mittels eines sechsten Steuersignals S6 durch die Steuereinrichtung 27 angesteuert werden. Die schaltbare Kupplung 52 kann dadurch zwischen einem Kopplungszustand und einem Entkopplungszustand umgeschaltet werden. Im Kopplungszustand sind die auf der Antriebswelle 50 angeordneten Antriebszahnräder 42 drehfest mit dem zweiten Getrieberad 49 verbunden. Im Entkopplungszustand ist lediglich eines der beiden Antriebszahnräder 42 drehfest mit dem zweiten Getrieberad 49 verbunden, während das jeweils andere Antriebszahnrad 42 vom zweiten Getrieberad 49 entkoppelt ist. Im Entkopplungszustand der Kupplung 52 werden somit lediglich die Fluidwerkzeuge 37a, 37b einer der beiden Fluidwerkzeugeinheiten 30 bewegt, während die Fluidwerkzeuge 37a, 37b der jeweils anderen Fluidwerkzeugeinheit 30 stillstehen. Beispielsgemäß wird die Kupplung 52 in den Kopplungszustand geschaltet, wenn die Steuereinrichtung 27 im Synchronarbeitsmodus arbeitet und wird in den Entkopplungszustand geschaltet, wenn die Steuereinrichtung 27 im Individualarbeitsmodus arbeitet.

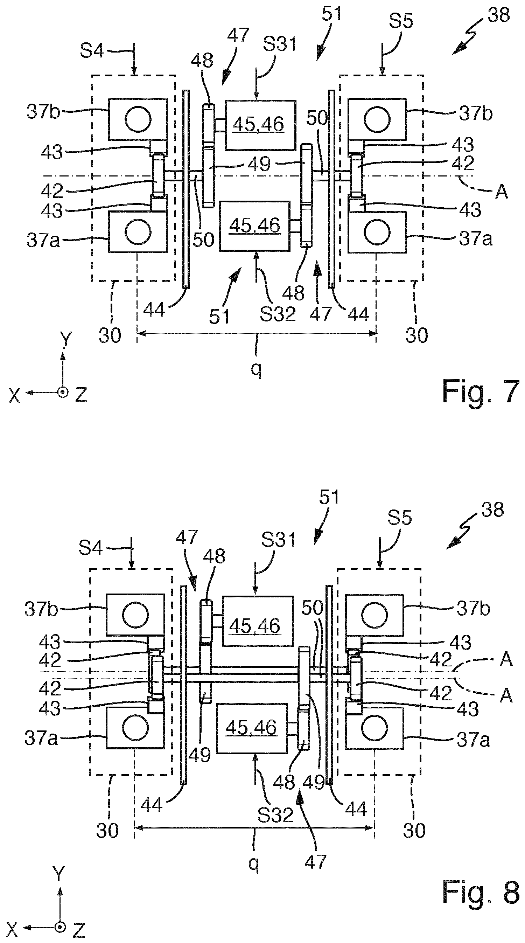

Anhand der Figuren 7-9 sind Ausgestaltungen der Werkzeugpositioniereinrichtung 38 mit zwei oder mehr Antriebssträngen 51 veranschaulicht, die jeweils einen separaten Antrieb 45 bzw. Servomotor 46 aufweisen. Jeder Antrieb 45 wird durch die Steuereinrichtung 27 durch ein separates individuelles Steuersignal S31, S32, S33, S34 angesteuert, die sozusagen Bestandteil des dritten Steuersignals S3 für die Werkzeugpositioniereinrichtung 38 sind.

Bei den in den Figuren 7 und 8 veranschaulichten Ausführungsbeispielen weist die Werkzeugpositioniereinrichtung 38 zwei separate Antriebsstränge 51 auf, wobei jeder Antriebsstrang 51 einer der beiden Fluidwerkzeugeinheiten 30 zugeordnet ist. Die beiden Antriebsstränge 51 sind entsprechend dem Ausführungsbeispiel gemäß Figur 5 ausgeführt, separat für jede vorhandene Fluidwerkzeugeinheit 30. Auf diese Weise könnten auch mehr als zwei Fluidwerkzeugeinheiten 30 über jeweils einen zugeordneten Antriebsstrang 51 der Werkzeugpositioniereinrichtung 38 betrieben werden, um die Fluidwerkzeuge 37a, 37b zu bewegen und zu positionieren. Um eine kompakte Anordnung zu erreichen, können die Antriebe 45 bzw. Servomotoren 46 bezüglich der Antriebsachse A auf unterschiedlichen, insbesondere diametral gegenüberliegenden Seiten angeordnet sein. Die Antriebswellen 50 jedes Antriebsstrangs 51 sind beispielsgemäß entlang einer gemeinsamen Antriebsachse A angeordnet.

Während bei dem in Figur 7 dargestellten Ausführungsbeispiel ein Antriebsstrang 51 genau einer Fluidwerkzeugeinheit 30 zugeordnet ist, kann bei einem anderen Ausführungsbeispiel ein Antriebsstrang 51 jeweils für die ersten Fluidwerkzeuge 37a jeder Fluidwerkzeugeinheit 30 und ein weiterer Antriebsstrang 51 für die zweiten Fluidwerkzeuge 37b jeder Fluidwerkzeugeinheit 30 vorhanden sein. Bei dieser Ausführungsform hat jeder Antriebsstrang 51 eine Antriebswelle 50, die jeweils entlang einer separaten Antriebsachse A angeordnet ist. Die Antriebsachsen A sind in Y-Richtung und/oder in Z-Richtung versetzt zueinander angeordnet, wie es stark schematisiert in Figur 8 veranschaulicht ist. Im Unterschied zu den bisherigen Ausführungsbeispielen stehen die Antriebszahnräder 42 beim Ausführungsbeispiel gemäß Figur 8 nur mit jeweils einer zugeordneten Zahnstange 43 in Eingriff. Die beiden Antriebszahnräder 42 der unterschiedlichen Antriebsstränge 51, die einer gemeinsamen Fluidwerkzeugeinheit 30 zugeordnet sind, sind somit entweder mit dem ersten Fluidwerkzeug 37a oder dem zweiten Fluidwerkzeug 37b über die jeweilige Zahnstange 43 antriebsverbunden. Im Übrigen entspricht der Aufbau der Antriebsstränge 51 dem Ausführungsbeispiel gemäß der Figuren 5-7, so dass auf die vorstehenden Erläuterungen verwiesen werden kann. Wie beim Ausführungsbeispiel gemäß Figur 6, kann auch hier optional in jeder Antriebswelle 50 eine Kupplung 52 angeordnet sein.

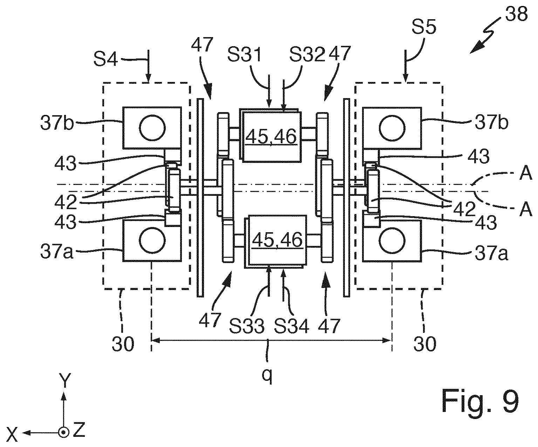

Bei dem in Figur 9 veranschaulichten Ausführungsbeispiel der Werkzeugpositioniereinrichtung 38 ist für jedes vorhandene Fluidwerkzeug 37a, 37b ein separater Antriebsstrang 51 vorhanden, beispielsgemäß also vier separate Antriebsstränge 51 mit jeweils einem Antrieb 45, einer Getriebestufe 47, einem Antriebszahnrad 42 und einer Zahnstange 43. Der Aufbau jedes Antriebsstrangs 51 entspricht dem Aufbau des Antriebsstrangs 51 aus Figur 5. Allerdings steht jedes Antriebszahnrad 42 lediglich mit einer Zahnstange 43 des zugeordneten Fluidwerkzeugs 37a oder 37b in Eingriff. Die einer gemeinsamen Fluidwerkzeugeinheit 30 zugeordneten Antriebswellen 50 und Antriebszahnräder 42 sind in Y-Richtung und/oder in Z-Richtung versetzt zueinander angeordnet. Beispielsgemäß erstrecken sich die Antriebswellen 50, die jeweils den ersten Fluidwerkzeugen 37a zugeordnet sind, entlang einer gemeinsamen Antriebsachse A und die Antriebswellen 50, die jeweils den zweiten Fluidwerkzeugen 37b zugeordnet sind, erstrecken sich entlang einer weiteren gemeinsamen Antriebsachse A. Die Antriebsachsen A sind in Y-Richtung und/oder in Z-Richtung versetzt zueinander angeordnet.

Bei den in den Figuren 8 und 9 dargestellten Ausführungsbeispielen könnten die Antriebswellen 50 auch entlang einer gemeinsamen Antriebsachse A angeordnet werden, wenn zumindest eine der Antriebswellen als Hohlwelle ausgebildet ist. Die Antriebszahnräder 42 und Zahnstangen 43 sind dann in X-Richtung zueinander versetzt angeordnet.

Zusätzlich oder alternativ kann der wenigstens eine Antrieb 45 bzw. seine Motorwelle entlang der oder koaxial zur Antriebsachse A angeordnet sein. Dazu kann beispielsweise die Motorwelle als Hohlwelle ausgebildet sein, so dass der Antrieb 45 einen Hohlwellenmotor bildet.

Bei einem weiteren Ausführungsbeispiel kann die Getriebestufe 47 oder eine zusätzliche Getriebestufe des Getriebes zwischen Antrieb 45 und Antriebszahnrad 42 eine Winkelgetriebestufe sein. Der Antrieb 45 kann dann eine Motorwelle aufweisen, die sich rechtwinkelig zur Antriebsachse A erstreckt, beispielsweise in die Y-Richtung.

Die Antriebe 45 der Antriebsstränge 51 sind beispielsgemäß um die beiden Antriebsachsen A verteilt angeordnet, was in Figur 9 lediglich stark schematisiert veranschaulicht ist.

Bei den Ausführungsbeispielen, bei denen die Werkzeugpositioniereinrichtung 38 mehrere separate Antriebsstränge 51 aufweist, können diese Antriebsstränge 51 steuerungstechnisch koordiniert betrieben bzw. gekoppelt werden. Im Synchronarbeitsmodus kann daher analog zu einer mechanischen Kopplung eine synchrone Bewegung des wenigstens einen Fluidwerkzeugs 37 jeder Fluidwerkzeugeinheit 30 durchgeführt werden. Im Individualarbeitsmodus können die Antriebsstränge 51 unabhängig voneinander angesteuert werden. Bei diesen Ausführungsbeispielen kann auf eine Kupplung 52 zum Entkoppeln eines Teils eines Antriebsstrangs 51 zur Realisierung des Individualarbeitsmodus verzichtet werden. Im Hinblick auf die Kosten ist eine Ausführungsform mit möglichst wenigen Antrieben 45 bzw. möglichst wenigen Servomotoren 46 bevorzugt.

Die Erfindung betrifft eine Fluidbearbeitungsmaschine 15 sowie ein Verfahren zur Bearbeitung von wenigstens einem Werkstück 16 mit wenigstens einem Fluidstrahl in einer gemeinsamen Arbeitskammer 17. Ein einziges Werkstück 16 hat in einer X-Richtung Werkstückteile in einen Querabstand q oder mehrere Werkstücke sind in X-Richtung im Querabstand q angeordnet und können durch jeweils eine zugeordnet Fluidwerkzeugeinheit 30 bearbeitet werden. Jede Fluidwerkzeugeinheit 30 weist wenigstens zwei Fluidwerkzeuge (37a, 37b) auf. Ein Werkzeugträger 31 gibt die Position der Fluidwerkzeugeinheiten 30 und Fluidwerkzeuge 37 in X-Richtung und Y-Richtung vor, die an dem gemeinsamen Werkzeugträger 31 angeordnet sind. Relativ zum Werkzeugträger 31 sind die Fluidwerkzeuge 37 in Z-Richtung bewegbar und positionierbar. Hierzu ist eine Werkzeugpositioniereinrichtung 38 vorhanden. In einem Synchronarbeitsmodus werden die Fluidwerkzeuge 37 der Fluidwerkzeugeinheiten 30 synchron bewegt, so dass eine synchrone Fluidbearbeitung des wenigstens einen Werkstücks 16 erfolgen kann. In einem Individualarbeitsmodus können die Fluidwerkzeuge 37 der unterschiedlichen Fluidwerkzeugeinheiten 30 unabhängig voneinander oder koordiniert verschieden voneinander positioniert und/oder bewegt werden.

Bei den hier beschriebenen Ausführungsbeispielen werden die Relativbewegungen zwischen den Fluidwerkzeugen 37 und den Werkstücken 16 während der Werkstückbearbeitung mittels der Werkzeugpositioniereinrichtung 38 durchgeführt. Alternativ oder zusätzlich dazu könnte für diesen Zweck auch die Werkstückpositioniereinrichtung 23 verwendet werden.

### Bezugszeichenliste:

- 15: Fluidbearbeitungsmaschine
- 16: Werkstück
- 17: Arbeitskammer

- 20: Halteeinrichtung
- 21: Werkstückhandhabungssystem
- 22: Drehteller
- 23: Werkstückpositioniereinrichtung

- 27: Steuereinrichtung
- 28: Querstrebe
- 29: Basis
- 30: Fluidwerkzeugeinheit
- 31: Werkzeugträger
- 32: Trägerpositioniereinrichtung
- 33: Einstelleinrichtung

- 37: Fluidwerkzeug
- 37a: erstes Fluidwerkzeug
- 37b: zweites Fluidwerkzeug
- 38: Werkzeugpositioniereinrichtung
- 39: Positioniersystem

- 42: Antriebszahnrad
- 43: Zahnstange
- 44: Lagerteil
- 45: Antrieb
- 46: Servomotor
- 47: Getriebestufe
- 48: erstes Getrieberad
- 49: zweites Getrieberad
- 50: Antriebswelle
- 51: Antriebsstrang
- 52: Kupplung

- I: Bearbeitungsstellung
- II: Werkstückwechselstellung

- A: Antriebsachse
- B: individuelle Drehachse
- C: gemeinsame Drehachse
- D: Basisachse
- E: Längsmittelebene
- q: Querabstand
- S1: erstes Steuersignal
- S2: zweites Steuersignal
- S3: drittes Steuersignal
- S31: Antriebssteuersignal
- S32: Antriebssteuersignal
- S33: Antriebssteuersignal
- S34: Antriebssteuersignal
- S4: viertes Steuersignal
- S5: fünftes Steuersignal
- X: X-Richtung
- Y: Y-Richtung
- Z: Z-Richtung

## Patentansprüche

1. Fluidbearbeitungsmaschine (15), die zur Bearbeitung von Werkstücken (16) mit wenigstens einem Fluidstrahl eingerichtet ist, aufweisend:
- eine Arbeitskammer (17),
- wenigstens eine Halteeinrichtung (20) zum Halten jeweils eines Werkstücks (16), wobei die wenigstens eine Halteeinrichtung (20) in einer Bearbeitungsstellung (I) in der Arbeitskammer (17) angeordnet ist,
- wenigstens zwei Fluidwerkzeugeinheiten (30),
- einen Werkzeugträger (31), an dem die wenigstens zwei Fluidwerkzeugeinheiten (30) angeordnet sind und der die Position der wenigstens zwei Fluidwerkzeugeinheiten (30) in einer X-Richtung und einer rechtwinkelig zur X-Richtung ausgerichteten Y-Richtung vorgibt, wobei in X-Richtung benachbarte Fluidwerkzeugeinheiten (30) einen Querabstand (q) zueinander aufweisen,
- ein Positioniersystem, das zur Einstellung einer Relativposition und Durchführung einer Relativbewegung zwischen den wenigstens zwei Fluidwerkzeugeinheiten (30) und dem wenigstens einen Werkstück (16) in X-Richtung und/oder in Y-Richtung und/oder in einer Z-Richtung eingerichtet ist, wobei die Z-Richtung rechtwinkelig zur X-Richtung und rechtwinkelig zur Y-Richtung ausgerichtet ist,
- eine Steuereinrichtung (27), die zur Ansteuerung des Positioniersystems eingerichtet ist,
dadurch gegenzeichnet , dass jede Fluidwerkzeugeinheit (30) wenigstens ein erstes Fluidwerkzeug (37a) und ein zweites Fluidwerkzeug (37b) aufweist.

2. Fluidbearbeitungsmaschine nach Anspruch 1, wobei die Steuereinrichtung (27) in einem Synchronbearbeitungsmodus dazu eingerichtet ist, die Positioniereinrichtung (38) derart anzusteuern, dass Relativbewegungen zwischen den wenigstens zwei Fluidwerkzeugeinheiten (30) und dem wenigstens einen Werkstück (16) synchron durchgeführt werden.

3. Fluidbearbeitungsmaschine nach Anspruch 1 oder 2, wobei das Positioniersystem eine Werkzeugpositioniereinrichtung (38) zur Bewegung der wenigstens zwei Fluidwerkzeugeinheiten (30) in Z-Richtung relativ zum Werkzeugträger (31) eingerichtet ist.

4. Fluidbearbeitungsmaschine nach einem der vorhergehenden Ansprüche, wobei wenigstens zwei Halteeinrichtungen (20) in einer Bearbeitungsstellung (I) in der Arbeitskammer (17) angeordnet sind und in der Bearbeitungsstellung (I) in X-Richtung den Querabstand (q) zueinander aufweisen.

5. Fluidbearbeitungsmaschine nach einem der vorhergehenden Ansprüche, wobei die Steuereinrichtung (27) zur Ansteuerung der Fluidwerkzeugeinheiten (30) eingerichtet ist, so dass die Fluidwerkzeugeinheiten (30) während der Bearbeitung des wenigstens einen Werkstücks (16) jeweils wenigstens einen Fluidstrahl auf das Werkstück (16) richten.

6. Fluidbearbeitungsmaschine nach Anspruch 5, wobei die Steuereinrichtung (27) dazu eingerichtet ist, die Fluidwerkzeugeinheiten (30) im Synchronarbeitsmodus synchron zu steuern, so dass die die Fluidwerkzeugeinheiten (30) das zugeordnete wenigstens eine Werkstück (16) synchron bearbeiten.

7. Fluidbearbeitungsmaschine nach einem der vorhergehenden Ansprüche, wobei der Werkzeugträger (31) in X-Richtung und/oder in Y-Richtung bewegbar gelagert ist, wobei eine das Positioniersystem eine Trägerpositioniereinrichtung (32) aufweist, die zur Bewegung und Positionierung des Werkzeugträgers (31) in X-Richtung und/oder Y-Richtung eingerichtet ist und wobei die Steuereinrichtung (27) zur Ansteuerung der Trägerpositioniereinrichtung (32) eingerichtet ist.

8. Fluidbearbeitungsmaschine nach einem der vorhergehenden Ansprüche, wobei das erste Fluidwerkzeug (37a) und das zweite Fluidwerkzeug (37b) in Y-Richtung übereinander bzw. nebeneinander angeordnet sind.

9. Fluidbearbeitungsmaschine nach Anspruch 3, wobei die Werkzeugpositioniereinrichtung (38) dazu eingerichtet ist, eines der Fluidwerkzeuge (37a oder 37b) in eine Rückzugsstellung zu bringen und/oder in einer Rückzugsstellung zu halten, wenn das jeweils andere der Fluidwerkzeuge (37b oder 37a) in einer Arbeitsstellung ist.

10. Fluidbearbeitungsmaschine nach Anspruch 3, wobei die Werkzeugpositioniereinrichtung (38) dazu eingerichtet ist, eines der Fluidwerkzeuge (37a oder 37b) in Z-Richtung rückwärts zu bewegen und gleichzeitig das jeweils andere der Fluidwerkzeuge (37b oder 37a) in Z-Richtung vorwärts zu bewegen.

11. Fluidbearbeitungsmaschine nach Anspruch 3, wobei die Werkzeugpositioniereinrichtung (38) wenigstens einen Antriebsstrang (51) aufweist und jeder Antriebsstrang (51) einen von der Steuereinrichtung (27) ansteuerbaren Antrieb (45), insbesondere ein Servomotor (46), aufweist.

12. Fluidbearbeitungsmaschine nach einem der vorhergehenden Ansprüche, wobei die Steuereinrichtung (27) dazu eingerichtet ist, das Positioniersystem in einem Individualarbeitsmodus derart anzusteuern, dass die die Relativbewegung und/oder Relativposition zwischen den Fluidwerkzeugeinheiten (30) relativ zum wenigstens einen Werkstück (16) unterschiedlich ist.

13. Fluidbearbeitungsmaschine nach einem der vorhergehenden Ansprüche, wobei die wenigstens eine Halteeinrichtung (20) Bestandteil einer Werkstückpositioniereinrichtung (23) sind, die von der Steuereinrichtung (27) angesteuert wird, und wobei jede Halteeinrichtung (20) um eine individuelle Drehachse (B) drehbar ist oder alle in der Bearbeitungsstellung angeordneten Halteeinrichtungen (20) um eine gemeinsame Drehachse (C) der Werkstückpositioniereinrichtung (23) drehbar sind.

14. Fluidbearbeitungsmaschine nach einem der vorhergehenden Ansprüche, wobei der Querabstand (q) abhängig von der Bearbeitungsaufgabe einstellbar ist.

15. Verfahren zur Fluidbearbeitung wenigstens eines Werkstücks (16) mit einem Fluidstrahl in einer Fluidbearbeitungsmaschine (15) nach einem der vorhergehenden Patentansprüche, umfassend die folgenden Schritte:
- Anordnen des wenigstens einen Werkstücks (16) in einer Arbeitskammer (17) der Fluidbearbeitungsmaschine (15),
- Bearbeiten des wenigstens einen Werkstücks (16) unter Verwendung von wenigstens zwei Fluidwerkzeugeinheiten (30), die an einem gemeinsamen Werkzeugträger (31) in einer X-Richtung mit einem Querabstand (q) zueinander angeordnet sind,
- aufeinander abgestimmtes Bewegen und Positionieren der Fluidwerkzeugeinheiten (30) und des wenigstens einen Werkstücks (16) relativ zueinander.

## Claims

1. A fluid processing machine (15) configured for processing workpieces (16) using at least one fluid jet, comprising:
- a working chamber (17),
- at least one holding device (20) for holding one respective workpiece (16), wherein the at least one holding device (20) is arranged in a processing position (I) in the working chamber (17),
- at least two fluid tool units (30),
- a tool carrier (31) on which the at least two fluid tool units (30) are arranged and which defines the position of the at least two fluid tool units (30) in an X-direction and in a Y-direction oriented perpendicular to the X-direction, wherein fluid tool units (30) adjacent to one another in the X-direction have a transverse distance (q) to each other,
- a positioning system configured to set a relative position and perform a relative movement between the at least two fluid tool units (30) and the at least one workpiece (16) in the X-direction and/or in the Y-direction and/or in a Z-direction, wherein the Z-direction is oriented perpendicular to the X-direction and perpendicular to the Y-direction,
- a control device (27) configured to control the positioning system,
**characterized in that** each fluid tool unit (30) comprises at least a first fluid tool (37a) and a second fluid tool (37b).

2. The fluid processing machine according to claim 1, wherein the control device (27) is configured, in a synchronous processing mode, to control the positioning device (38) such that relative movements between the at least two fluid tool units (30) and the at least one workpiece (16) are performed synchronously.

3. The fluid processing machine according to claim 1 or 2, wherein the positioning system a tool positioning device (38) configured to move the at least two fluid tool units (30) in the Z-direction relative to the tool carrier (31).

4. The fluid processing machine according to any one of the preceding claims, wherein at least two holding devices (20) are arranged in a processing position (I) in the working chamber (17) and, in the processing position (I), have the transverse distance (q) to each other in the X-direction.

5. The fluid processing machine according to any one of the preceding claims, wherein the control device (27) is configured to control the fluid tool units (30) such that the fluid tool units (30) each direct at least one fluid jet onto the workpiece (16) during the processing of the at least one workpiece (16).

6. The fluid processing machine according to claim 5, wherein the control device (27) is configured to control the fluid tool units (30) synchronously in the synchronous operating mode, such that the fluid tool units (30) process the associated at least one workpiece (16) synchronously.

7. The fluid processing machine according to any one of the preceding claims, wherein the tool carrier (31) is mounted so as to be movable in the X-direction and/or in the Y-direction, wherein the positioning system comprises a carrier positioning device (32) configured to move and position the tool carrier (31) in the X-direction and/or the Y-direction, and wherein the control device (27) is configured to control the carrier positioning device (32).

8. The fluid processing machine according to any one of the preceding claims, wherein the first fluid tool (37a) and the second fluid tool (37b) are arranged above one another or side by side, respectively, in the Y-direction.

9. The fluid processing machine according to claim 3, wherein the tool positioning device (38) is configured to bring one of the fluid tools (37a or 37b) into a retracted position and/or to hold it in a retracted position when the respective other of the fluid tools (37b or 37a) is in an operating position.

10. The fluid processing machine according to claim 3, wherein the tool positioning device (38) is configured to move one of the fluid tools (37a or 37b) backwards in the Z-direction and simultaneously move the respective other of the fluid tools (37b or 37a) forwards in the Z-direction.

11. The fluid processing machine according to claim 3, wherein the tool positioning device (38) comprises at least one drive train (51) and each drive train (51) comprises a drive (45) controllable by the control device (27), in particular a servomotor (46).

12. The fluid processing machine according to any one of the preceding claims, wherein the control device (27) is configured to control the positioning system in an individual operating mode such that the relative movement and/or relative position between the fluid tool units (30) relative to the at least one workpiece (16) is different.

13. The fluid processing machine according to any one of the preceding claims, wherein the at least one holding device (20) is a component of a workpiece positioning device (23) controlled by the control device (27), and wherein each holding device (20) is rotatable about an individual axis of rotation (B) or all holding devices (20) arranged in the processing position are rotatable about a common axis of rotation (C) of the workpiece positioning device (23).

14. The fluid processing machine according to any one of the preceding claims, wherein the transverse distance (q) is adjustable depending on the processing task.

15. A method for fluid processing of at least one workpiece (16) with a fluid jet in a fluid processing machine (15) according to any one of the preceding claims, comprising the following steps:
- arranging the at least one workpiece (16) in a working chamber (17) of the fluid processing machine (15),
- processing the at least one workpiece (16) using at least two fluid tool units (30) which are arranged on a common tool carrier (31) at a transverse distance (q) to each other in an X-direction,
- moving and positioning the fluid tool units (30) and the at least one workpiece (16) relative to one another in a coordinated manner.

## Revendications

1. Machine de traitement par fluide (15) qui est agencée en vue du traitement de pièces (16) avec au moins un jet de fluide, comportant :
- une chambre de travail (17),
- au moins un dispositif de support (20) destiné à tenir respectivement une pièce (16), le dispositif de support (20), au nombre d'au moins un, étant placé dans une position de traitement (I) dans la chambre de travail (17),
- au moins deux unités d'outil à fluide (30),
- un porte-outil (31) sur lequel sont disposées les unités d'outil à fluide (30), au nombre d'au moins deux, et qui prédéfinit la position des unités d'outil à fluide (30), au nombre d'au moins deux, dans une direction X et une direction Y orientée à angle droit par rapport à la direction X, les unités d'outil à fluide (30) adjacentes dans la direction X présentant une distance latérale (q) les unes par rapport aux autres,
- un système de positionnement qui est agencé en vue du réglage d'une position relative et de l'exécution d'un mouvement relatif entre les unités d'outil à fluide (30), au nombre d'au moins deux, et la pièce (16), au nombre d'au moins une, dans la direction X et/ou dans la direction Y et/ou dans une direction Z, sachant que la direction Z est orientée à angle droit par rapport à la direction X et à angle droit par rapport à la direction Y,
- un dispositif de commande (27) qui est agencé en vue de l'activation du système de positionnement,
**caractérisée en ce que** chaque unité d'outil à fluide (30) comporte au moins un premier outil à fluide (37a) et un deuxième outil à fluide (37b).

2. Machine de traitement par fluide selon la revendication 1, dans laquelle le dispositif de commande (27) est conçu, dans un mode de traitement synchrone, pour activer le dispositif de positionnement (38) de manière à ce que des mouvements relatifs entre les unités d'outil à fluide (30), au nombre d'au moins deux, et la pièce (16), au nombre d'au moins une, soit effectués de façon synchrone.

3. Machine de traitement par fluide selon la revendication 1 ou 2, dans laquelle le système de positionnement est conçu comme un dispositif de positionnement d'outil (38) destiné au déplacement des unités d'outil à fluide (30), au nombre d'au moins deux, dans la direction Z par rapport au porte-outil (31).

4. Machine de traitement par fluide selon une des revendications précédentes, dans laquelle au moins deux dispositifs de support (20) sont placés dans une position de traitement (I) dans la chambre de travail (17) et présentent, dans la position de traitement (I), la distance transversale (q) dans la direction X l'un par rapport à l'autre.

5. Machine de traitement par fluide selon une des revendications précédentes, dans laquelle le dispositif de commande (27) est conçu pour l'activation des unités d'outil à fluide (30), de manière à ce que les unités d'outil à fluide (30) dirigent respectivement au moins un jet de fluide sur la pièce (16) pendant le traitement de la pièce (16), au nombre d'au moins une.

6. Machine de traitement par fluide selon la revendication 5, dans laquelle le dispositif de commande (27) est conçu pour activer les unités d'outil à fluide (30) de manière synchrone dans le mode de travail synchrone, de telle sorte que les unités d'outil à fluide (30) traitent de manière synchrone la pièce (16) associée, au nombre d'au moins une.

7. Machine de traitement par fluide selon une des revendications précédentes, dans laquelle le porte-outil (31) est monté avec possibilité de déplacement dans la direction X et/ou dans la direction Y, le système de positionnement comportant un dispositif de positionnement de support (32) qui est conçu pour le déplacement et le positionnement du porte-outil (31) dans la direction X et/ou la direction Y, et le dispositif de commande (27) étant conçu pour l'activation du dispositif de positionnement de support (32).

8. Machine de traitement par fluide selon une des revendications précédentes, dans laquelle le premier outil à fluide (37a) et le deuxième outil à fluide (37b) sont disposés l'un au-dessus de l'autre, respectivement l'un à côté de l'autre, dans la direction Y.

9. Machine de traitement par fluide selon la revendication 3, dans laquelle le dispositif de positionnement d'outil (38) est agencé pour amener l'un des outils à fluide (37a ou 37b) dans une position de retrait et/ou pour le maintenir dans une position de retrait, si respectivement l'autre outil à fluide (37b ou 37a) se trouve dans une position de travail.

10. M achine de traitement par fluide selon la revendication 3, dans laquelle le dispositif de positionnement d'outil (38) est agencé pour déplacer l'un des outils à fluide (37a ou 37b) vers l'arrière dans la direction Z et pour déplacer en même temps respectivement l'autre outil à fluide (37b ou 37a) vers l'avant dans la direction Z.

11. M achine de traitement par fluide selon la revendication 3, dans laquelle le dispositif de positionnement d'outil (38) comporte au moins une chaîne cinématique (51), et chaque chaîne cinématique (51) comporte un moyen d'entraînement (45), en particulier un servomoteur, pouvant être activé par le dispositif de commande (27).

12. M achine de traitement par fluide selon une des revendications précédentes, dans laquelle le dispositif de commande (27) est conçu pour activer le système de positionnement dans un mode de travail individuel, de manière à ce que le mouvement relatif et/ou la position relative entre les unités d'outil à fluide (30) soit différente par rapport à la pièce (16), au nombre d'au moins une.

13. M achine de traitement par fluide selon une des revendications précédentes, dans laquelle le dispositif de support (20), au nombre d'au moins un, fait partie intégrante d'un dispositif de positionnement de pièce (23) qui est activé par le dispositif de commande (27), et dans laquelle chaque dispositif de support (20) peut être tourné autour d'un axe de rotation individuel (B) ou tous les dispositifs de support (20) placés dans la position de traitement peuvent être tournés autour d'un axe de rotation commun (C) du dispositif de positionnement de pièce (23).

14. M achine de traitement par fluide selon une des revendications précédentes, dans laquelle la distance transversale (q) peut être réglée en fonction de la tâche de traitement.

15. Procédé de traitement par fluide d'au moins une pièce (16) avec un jet de fluide dans une machine de traitement par fluide (15) selon une des revendications précédentes, comprenant les étapes suivantes :
- mise en place de la pièce (16), au nombre d'au moins une, dans une chambre de travail (17) de la machine de traitement à fluide (15),
- traitement de la pièce (16), au nombre d'au moins une, en utilisant au moins deux unités d'outil à fluide (30) qui sont disposées sur un porte-outil (31) commun, dans une direction X, avec une distance transversale (q) l'une par rapport à l'autre,
- déplacement et positionnement mutuellement adaptés des unités d'outil à fluide (30) et de la pièce (16), au nombre d'au moins une, les unes par rapport aux autres.
